(19) **Europäisches Patentamt / European Patent Office / Office européen des brevets**

(11) **EP 3 235 201 B1**

(12) # FASCICULE DE BREVET EUROPEEN

(45) Date de publication et mention
de la délivrance du brevet:
**15.08.2018 Bulletin 2018/33**

(51) Int Cl.:
*H04L 25/02* (2006.01)   *H04L 25/03* (2006.01)
*H04L 27/00* (2006.01)

(21) Numéro de dépôt: **15817972.1**

(22) Date de dépôt: **07.12.2015**

(86) Numéro de dépôt international:
**PCT/FR2015/053354**

(87) Numéro de publication internationale:
**WO 2016/097528 (23.06.2016 Gazette 2016/25)**

(54) **INDENTIFICATION CONJOINTE DE SIGNAUX CONFONDUS EN TELECOMMUNICATIONS NUMERIQUES NON COOPERATIVES**

VERBINDUNGSIDENTIFIZIERUNG VON MISCHSIGNALEN IN NICHTKOOPERATIVER DIGITALER TELEKOMMUNIKATION

JOINT IDENTIFICATION OF MERGE SIGNALS IN NON-COOPERATIVE DIGITAL TELECOMMUNICATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2014 FR 1402936**

(43) Date de publication de la demande:
**25.10.2017 Bulletin 2017/43**

(73) Titulaire: **Avantix
13794 Aix-en-Provence (FR)**

(72) Inventeurs:
• **COURTAT, Thomas
  75015 Paris (FR)**
• **CIBLAT, Philippe
  75020 Paris (FR)**
• **BIANCHI, Pascal
  Paris 75013 (FR)**
• **FERNANDEZ - BIANCO, Miguel
  13170 Les Pennes Mirabeau (FR)**

(74) Mandataire: **Novagraaf Technologies
Bâtiment O2
2, rue Sarah Bernhardt
CS90017
92665 Asnières-sur-Seine Cedex (FR)**

(56) Documents cités:
• **Steffen Barembruch: "Approximate Maximum Likelihood Methods for Large Scale Blind Classification and Identification in Digital Communications", , 30 décembre 2010 (2010-12-30), XP055201080, Extrait de l'Internet: URL:https://tel.archives-ouvertes.fr/paste l-00574365/document [extrait le 2015-07-08] cité dans la demande**
• **Sangwoo Park ET AL: "Joint Blind Symbol Rate Estimation and Data Symbol Detection for Linearly Modulated Signals", JCOMMS, 10 novembre 2009 (2009-11-10), XP055201697, Extrait de l'Internet: URL:http://people.qatar.tamu.edu/khalid.qa raqe/kqperso/Joint_Blind_Symbol_Rate_Estim ation.pdf [extrait le 2015-07-10]**
• **E Punskaya ET AL: "Sequential Monte Carlo methods for digital communications", , 1 janvier 2003 (2003-01-01), XP055201073, Extrait de l'Internet: URL:http://search.proquest.com/docview/301 630869 cité dans la demande**

**Description**

La présente invention concerne généralement les méthodes et systèmes de traitement du signal en télécommunications numériques, et plus particulièrement ceux de séparation aveugle de tels signaux ou de signaux de caractéristiques similaires.

En télécommunications numériques, un émetteur cherche à transmettre une suite de bits d'information à un (ou plusieurs) récepteur(s). L'émetteur effectue une suite d'opérations de codage afin de rendre possible la transmission de l'information sur un support physique que l'on appelle aussi canal de propagation (tel qu'une fibre optique, ou tel qu' est plus particulièrement le cas ici, par propagation non contrainte dans l'espace). Ce canal de propagation n'est, généralement, pas parfait dans le sens où le signal reçu n'est pas une réplique exacte du signal émis (perturbations thermiques, réverbérations, dispersion).

Au niveau de l'émetteur, on se donne une constellation (ASK, M-PSK, M-QAM) qui est un ensemble fini de symboles dans le plan complexe et une fonction qui à nombre défini de bits consécutifs associe un symbole de la constellation.

Chaque symbole de la suite est multiplié par une forme d'onde continue (ou filtre de mise en forme), décalée dans le temps pour former le signal en bande de base.

Ce signal en bande de base est transposé à une certaine fréquence, dite fréquence porteuse, puis émis par une interface radio (une antenne dans le cas d'une transmission sans fil).

A la réception, on effectue les opérations inverses pour reconstituer les bits d'information à partir du signal mesuré sur l'interface radio. Notamment, la démodulation est l'opération qui identifie à la réception les symboles effectivement émis par l'émetteur à partir du signal reçu.

On parle de démodulation aveugle dès qu'un des paramètres de la transmission est inconnu de l'émetteur. En télécommunications coopératives, la plupart des paramètres sont définis par contrat entre l'émetteur et le récepteur (fréquence de porteuse, type de constellation, décalage temporel entre les formes d'onde, puissance d'émission). Les seules inconnues qui subsistent sont d'éventuelles erreurs de synchronisation et l'effet du canal de propagation. Ces paramètres sont, en général, estimés par émission régulière de séquences, dites pilotes connues des deux parties. L' opération compensant les effets du canal avant démodulation est appelée égalisation.

En télécommunications non coopératives en revanche, l'intégralité des paramètres est inconnue - ou connue en ordre de grandeur seulement - et il n'y a pas de séquences pilotes pour faciliter l'égalisation.

La séparation de sources est un problème générique où l'on cherche à extraire d'un signal composite les signaux source qui le constituent.

La séparation aveugle de sources désigne la sous-classe des problèmes de séparation quand les caractéristiques des signaux source et de leur mélange sont inconnues ou très partiellement connues a priori. Des hypothèses statistiques sur les signaux source et/ou sur la nature de leur mélange s'avèrent nécessaires pour que ce problème soit soluble. Il est, par exemple, couramment supposé :

-   que les sources sont mutuellement indépendantes ;
-   que le nombre maximal de sources constituantes est connu ;
-   que le mélange est linéaire ;
-   qu'il existe des statistiques discriminantes entre les sources constituantes.

Nous nous intéressons ici à la séparation et à la démodulation aveugle de signaux de télécommunication numérique dans un cadre non coopératif. Nous nous intéressons plus spécifiquement à un cas où il n'existe pas de statistiques discriminantes claires entre les sources.

A titre d'exemple, on cite l'identification de signaux émis selon le protocole de transmission satellitaire « DoubleTalk ® Carrier-in-Carrier®». Cette technique de transmission satellitaire utilise une même bande de fréquence pour l'échange d'information en continu entre deux pairs. Un signal DoubleTalk intercepté consiste, donc, en la superposition en temps et en fréquence de deux signaux de mêmes caractéristiques. L'identification de ces signaux est un problème de séparation et de démodulation aveugle de sources.

Parmi les méthodes de démodulation aveugle en télécommunications numériques, on s'intéresse à celles qui reposent :

-   sur l'algorithme de classification EM (pour « Expectation-Maximization » en anglais, soit « Espérance-Maximisation ») pour l'estimation des paramètres du signal ; et
-   sur l'algorithme de Viterbi pour la démodulation.

Les documents (S. Barembruch, « Méthodes approchées de maximum de vraisemblances pour la classification et identification aveugles en communications numériques », rapport de thèse, Telecom ParisTech, 7 mars 2011) et (E.

Punskaya, « Sequential Monte Carlo methods for digital communications », rapport de thèse, université de Cambridge, 2003) divulguent deux méthodes proches alliant le filtrage particulaire aux algorithmes EM et Viterbi.

Dans ces deux documents, le modèle du signal à démoduler s'écrit comme suit:

$$y(i) = \sum_{j=0}^{J} h(j)s(i-j) + \eta(i)$$

ou encore :

$$y(i) = < h \mid S(i) > + \eta(i)$$

où $S(i)$ est la version vectorisée des symboles $s(i$-$J)$ à $s(i)$ qui appartiennent à une constellation $C$, $h$ est un filtre linéaire modélisant le canal de propagation, et $\eta$ est un bruit blanc gaussien de variance $\sigma^2$. L'algorithme EM permet d'estimer le filtre $h$ et la variance $\sigma^2$ selon un paradigme probabiliste et l'algorithme de Viterbi permet ensuite de reconstituer la séquence $\hat{S}$ de symboles vectorisés qui maximise la probabilité des observations du signal composite $y$.

L'algorithme EM permet d'approcher itérativement la valeur du vecteur de paramètres $\theta = (h, \sigma^2)$ qui maximise la vraisemblance du signal observé. A chaque itération, on applique successivement une étape E (pour espérance) et une étape M (pour maximisation).

A l'itération $k$, on a un estimé $\theta^{(k)} = (h^{(k)}, \sigma^{2(k)})$ des paramètres du système.

- Etape E: cette étape cherche à évaluer l'espérance conditionnelle de la log-Vraisemblance des observations :

$$\boldsymbol{L}_{\theta^{(k)}}(\theta) = \boldsymbol{E}\{log\, \boldsymbol{P}_{\theta}(\,(y(1{:}I), S(1{:}I) = X(1{:}I)) \mid X(1{:}I) \sim \boldsymbol{P}_{\theta^{(k)}}(\cdot \mid y(1{:}I))\}$$

qui se réécrit

$$\boldsymbol{L}_{\theta^{(k)}}(\theta) = \sum_{i} \sum_{X \in C^J} \beta_{i,\theta^{(k)}}(X) \cdot \boldsymbol{L'}_{\theta}(y(i) \mid X(i) = X) \,(+cste(\theta))$$

Avec pour tout temps $i$, $X(i)$ est la variable vectorielle dans $C^J$ qui désigne une valeur possible pour le vecteur de symboles $S(i)$ effectivement émis, l'écriture $y(1{:}I)$ désigne la suite d'observations $(y(1),...,y(I))$ du signal composite $y$, $\beta_{i,\theta(k)}(X) = \boldsymbol{P}_{\theta(k)}(X(i) = X \mid y(1{:}I))$ est la distribution de lissage et $\boldsymbol{L'}_{\theta}(y(i) \mid X(i) = X) = log\boldsymbol{P}_{\theta}(y(i) \mid X(i) = X) = |y(i) - \langle h \mid X \rangle|^2/2\sigma^2$. Le terme $cste$ ne dépend pas de $\theta$. Il n'a donc pas besoin d'être calculé, et est omis dans la définition de l'espérance conditionnelle de la log-Vraisemblance $\boldsymbol{L}_{\theta(k)}$.

L'enjeu de l'étape E est de calculer les distributions de lissage $\beta_{i,\theta(k)}(X)$, ce qui se fait en calculant successivement les distributions dites de filtrage ($\boldsymbol{P}_{\theta(k)}(X(i) = X \mid y(1{:}i))$) puis de lissage ($\beta_{i,\theta(k)}(X)$), au moyen par exemple de l'algorithme Forward-Backard de Baum et Welch.

- Etape M: une fois les quantités $\beta_{i,\theta(k)}(X)$ calculées, l'étape M met à jour les paramètres $\theta^{(k)}$ en $\theta^{(k+1)}$ selon

$$\theta^{(k+1)} = \text{argmax}_{\theta}\, \boldsymbol{L}_{\theta^{(k)}}(\theta)$$

En théorie, la suite de vecteurs $\theta^{(k)}$ converge vers le vecteur $\theta$ qui maximise la vraisemblance des observations. Cependant, appliqué à la démodulation d'un signal de communication numérique, l'algorithme EM est mis en défaut en termes de complexité calculatoire assez rapidement avec la taille du filtre $h$ et/ou la taille de la constellation $C$.

La contribution des deux documents cités ci-dessus est de dépasser cette limitation de complexité avec les notions de filtrage et de lissage particulaire qui permettent d'approximer le calcul de la distribution de lissage $\beta_{i,\theta(k)}(X)$ en limitant le nombre d'états $X$ à évaluer.

Ainsi, ils considèrent que $\beta_{i,\theta(k)}(X) \simeq \sum_{r \leq R} \omega_{r,i} \cdot \delta(X$-$Z_{r,i})$ où $\delta(\cdot)$ est la distribution de Dirac sur l'espace d'états $C^J$ ; pour tout $i$, les $(Z_{r,i})_{1 \leq r \leq R}$ sont $R$ représentants de l'espace d'état bien choisis et en petit nombre comparé à la taille de cet espace ; pour tout $i,r$, $\omega_{r,i} \in [0,1]$ et pour tout $i$, $\sum_{r} \omega_{r,i} = 1$. Les ensembles $\{(Z_{r,i}, \omega_{r,i})\}_{i,r}$ s'appellent des particules et l'enjeu de la méthode particulaire et de formuler un algorithme permettant de les calculer récursivement sur l'indice de temps $i$.

Pour ce faire, on procède en deux temps:

- d'abord, dans une étape dite de filtrage, on calcule pour tout $i$ la distribution de filtrage $P_{\theta(k)}(X(i) = X|y(1),\cdots,y(i))$ sous la forme

$$P_{\theta^{(k)}}(X(i) = X\,|y(1),\cdots,y(i)) \simeq \sum_{r \leq R} \xi_{r,i} \cdot \delta(X - Z_{r,i})$$

avec pour tout $i,r$, $\xi_{r,i} \in [0,1]$ et pour tout $i,\sum_r \xi_{r,i} = 1$ ;

- puis, une étape dite de lissage où les coefficients $\xi_{r,i}$ sont transformés en coefficients $\omega_{r,i}$ qui intègrent les observations postérieures au temps $i$ pour obtenir

$$\beta_{i,\theta^{(k)}}(X) = P_{\theta^{(k)}}(X(i) = X\,|y(1),\cdots,y(I)) \simeq \sum_{r \leq R} \omega_{r,i} \cdot \delta(X - Z_{r,i})$$

On se donne un nombre appelé seuil et un noyau de transition $A_i(\cdot,\cdot): C^J \times C^J \to [0,1]$ qui dépend éventuellement de l'échantillon $y(i)$ ; le calcul de la distribution de filtrage $P_{\theta}^{(k)}(X(i) = X|y(1),\cdots,y(i))$ est réalisé récursivement, selon les étapes :

- En entrée, soit $\{((Z_{r,i-1}, \xi_{r,i-1}))\}_r$ une approximation particulaire de $P_{\theta(k)}(X(i-1) = X|y(1),\cdots,y(i-1))$ ;

- si $\sum_r \xi_{i-1,r}^2 \leq \text{seuil}$
  - ○ poser pour tout $r$, $\dot{Z}_{i-1,r} = Z_{i-1,r}$ et $\dot{\xi}_{i-1,r} = \xi_{i-1,r}$

- si $\sum_r \xi_{i-1,r}^2 > \text{seuil}$
  - ○ tirer une variable multinomiale: $(\Upsilon_1,\cdots,\Upsilon_R) \sim \text{Mult}_R(\xi_{i-1,1},\cdots, \xi_{i-1,R})$ (Les $\Upsilon_r$ sont des variables aléatoires entières dont la somme vaut $R$ et l'espérance de chaque variable vaut $R \cdot \xi_{i-1,r}$)
  - ○ soit $\varepsilon\colon [\![1, R]\!] \to [\![1, R]\!]$, $\varepsilon(r) = \inf\{r, \sum_{1 \leq r' \leq r}\Upsilon_{r'} \geq r\}$
  - ○ pour tout $r \in [\![1, R]\!]$, $\dot{Z}_{i-1,r} = \dot{Z}_{i-1,\varepsilon(r)}$ et $\dot{\xi}_{i-1,r} = 1/R$

- pour chaque $1 \leq r \leq R$ :
  - ○ tirer $Z_{i,r}$ selon $A_i(\cdot,\dot{Z}_{i-1,r})$
  - ○ poser : $\Xi_{i,r} = \dot{\xi}_{i-1,r} \cdot (P_{\theta(k)}(Z_{i,r}|y(i),\dot{Z}_{i-1,r})/A_i(Z_{i,r},\dot{Z}_{i-1r}))$
  - ○ normaliser les poids :
    - • $\Xi_i = \sum_r \Xi_{i,r}$
    - • $\xi_{ij} = \Xi_{i,r}/\Xi_i$

En sortie, $\{(Z_{i,r},\xi_{i,r})\}_r$ est une approximation particulaire de $P_{\theta(k)}(X(i) = X|y(1),\cdots,y(i))$.

Le succès de cette méthode dépend du choix d'un noyau $A_i(\cdot,\cdot)$ adapté aux particularités du problème traité.

Les documents cités proposent et comparent différentes méthodes pour déduire des coefficients de filtrage les coefficients de lissage. Nous retenons en particulier la méthode dite « Fixed Lag Smoothing ».

Après l'estimation des paramètres du modèle du signal composite par cet algorithme EM-particulaire, les états de la technique cités ci-dessus utilisent une adaptation de l'algorithme de Viterbi pour réaliser la démodulation. Cette adaptation - dite Viterbi Stochastique - limite l'exploration du treillis du signal aux états des particules obtenues lors de la dernière itération de l'algorithme EM.

Cette approche permet ainsi de résoudre le problème de la démodulation numérique avec une complexité applicable à des filtres et/ou des constellations de grande dimension.

Ces états de la technique présentent plusieurs limitations pour être directement adaptés au problème de séparation et démodulation aveugle de signaux numériques confondus parce qu'entre autres,

- leur formalisation se limite à une seule source ;
- ils supposent qu'une synchronisation est acquise entre l'émetteur et le récepteur. Cependant, il est impossible pour un intercepteur de se synchroniser sur plusieurs signaux en même temps. Il s'ensuit que dans le cas d'un mélange de signaux, on ne peut supposer qu'une synchronisation est acquise, compromettant ainsi l'exploitation du modèle purement séquentiel des méthodes citées ;
- ils considèrent un canal de propagation causal. Cependant, le défaut de synchronisation induit sur chaque voie (c.à.d. sur chaque signal du mélange) un filtre non causal équivalent.

En outre, un problème spécifique à l'exemple des communications numériques « DoubleTalk ® Carrier-in-Carrier®» cité ci-dessus est que les signaux à séparer sont, théoriquement, émis à la même fréquence, aux mêmes instants et avec le même débit. Toutefois, dans la pratique, les caractéristiques temps-fréquence de ces signaux peuvent légèrement différer en raison d'une synchronisation non-parfaite des émetteurs de ces signaux. Le point de fonctionnement de ce système s'appuie sur des paramètres de synchronisation très proches (mais pas rigoureusement identiques) qui sont, en l'espèce, inconnus ou au mieux connus par leur ordre de grandeur. Il s'ensuit qu'il est impossible de prétendre séparer dans tous les cas de figure les signaux par les techniques classiques de filtrage temps-fréquence ou en négligeant un des deux signaux en faveur de l'autre.

Un objet de la présente invention est de proposer des méthodes de séparation et de démodulation aveugles en télécommunications numériques de signaux compris dans un signal composite.

Un autre objet de la présente invention est de proposer des méthodes permettant de séparer et de démoduler en aveugle des signaux numériques fonctionnant aussi bien avec des signaux de paramètres différents qu'avec des signaux de paramètres de modulation très proches, voire identiques.

Un autre objet de la présente invention est de proposer des méthodes permettant de séparer et de démoduler en aveugle des signaux numériques en temps réel, c'est-à-dire avec des complexités en temps de traitement et en stockage de données linéaires selon le nombre d'échantillons du signal composite prélevés.

Un autre objet de la présente invention est de proposer des méthodes permettant de séparer et de démoduler en aveugle deux signaux numériques stables numériquement.

Un autre objet de la présente invention est de proposer des méthodes permettant de séparer et de démoduler en aveugle deux signaux numériques avec un canal et des paramètres évoluant dans le temps.

Un autre objet de la présente invention est la démodulation aveugle et conjointe des différentes voies d'un signal « DoubleTalk ® Carrier-in-Carrier®».

A ces fins, l'invention se rapporte, selon un premier aspect, à une méthode temps réel de séparation et de démodulation aveugle de signaux de télécommunication numérique, à partir de l'observation au moyen d'un unique capteur d'un signal composite comprenant ces signaux, les paramètres de ces signaux incluant leur type de modulation, leur amplification, leur déphasage, leur temps de retard au niveau du capteur, leur fréquence et leur temps symbole, ces paramètres pour les différentes signaux pouvant être différents, ou égaux, cette méthode comprenant les étapes suivantes :

- acquisition d'une première pluralité d'observations du signal composite réalisées au moyen de l'unique capteur ;
- estimation, à partir de la première pluralité d'observations acquise, des paramètres des signaux au sens du Maximum de Vraisemblance par un algorithme Espérance-Maximisation, l'espérance conditionnelle de la log-vraisemblance étant calculée, dans cet algorithme, récursivement par une méthode de filtrage-lissage particulaire ;
- démodulation conjointe des signaux selon un algorithme de Viterbi stochastique.

La méthode de filtrage-lissage particulaire comprend une approximation particulaire de la distribution de filtrage, cette approximation particulaire assignant, en plus des poids, des multiplicités aux particules de cette approximation, une multiplicité étant le nombre de particules représentant un même état.

La méthode de filtrage-lissage particulaire comprend une approximation particulaire de la distribution de lissage, cette approximation particulaire assignant, en plus des poids, des multiplicités aux particules de cette approximation, une multiplicité étant le nombre de particules représentant un même état.

Cette méthode comprend, en outre,

- une étape d'acquisition d'une deuxième pluralité d'observations du signal composite réalisées au moyen de l'unique capteur ;
- une étape d'estimation, à partir de la deuxième pluralité d'observations acquise, des paramètres des signaux au sens du Maximum de Vraisemblance par un algorithme Espérance-Maximisation, l'espérance conditionnelle de la log-vraisemblance étant calculée, dans cet algorithme, récursivement par une méthode de filtrage-lissage particulaire ;
- une étape d'estimation à long terme des paramètres, cette estimation à long terme des paramètres étant associée à la deuxième pluralité d'observations et étant une combinaison linéaire des paramètres estimés à partir de la première pluralité d'observations et des paramètres estimés de la deuxième pluralité d'observations.

L'invention se rapporte, selon un deuxième aspect, à un produit programme d'ordinateur implémenté sur un support mémoire, susceptible d'être mis en oeuvre au sein d'une unité de traitement informatique et comprenant des instructions pour la mise en oeuvre d'une méthode telle que présentée ci-dessus.

D'autres objets et avantages de l'invention apparaîtront à la lumière de la description de modes de réalisation, faite ci-après en référence aux dessins annexés dans lesquels :

- les figures 1-6 illustrent schématiquement différentes étapes d'une méthode de séparation aveugle de sources selon divers modes de réalisation ;
- les figures 7-15 illustrent schématiquement les résultats obtenus à différentes étapes de la méthode de séparation appliquée à un signal composite « DoubleTalk ® Carrier-in-Carrier®».

Dans un mode de réalisation, on enregistre au moyen d'un capteur unique un signal composite $y(t)$ comprenant un mélange de $N$ signaux source $(s_n(t))_{n=1..N}$. Les signaux $(s_n(t))_{n=1..N}$, appelés dans la suite voies, contiennent les symboles d'information $(s_n(i))_{i=1..\infty}$ issus respectivement des constellations $C_n = (c_g)_{g=1..G_n}$ et portés respectivement par des fonctions d'onde $h_n(\cdot)$. Le signal composite $y(t)$ s'écrit en théorie:

$$y(t) = \sum_{n=1}^{N} A_n . e^{\imath 2\pi \delta f_n t} \left( \sum_{j=-\infty}^{j=+\infty} h_n(t - jT_n - \tau_n) s_n(j) \right) + \eta(t)$$

où:

- $A_n$ est le gain complexe du signal source $s_n$ (c.-à-d. $A_n = |A_n| e^{\imath 2\pi \varphi}_n$ avec $|A_n|$ l'amplification (ou gain) et $\varphi_n$ le déphasage (ou l'erreur de phase) sur la voie $n$) ;
- $h_n$ est la forme analytique du filtre de mise en forme de la voie $n$ (par exemple, un filtre en Cosinus Surélevé) ;
- $s_n$ est la suite de symboles de la constellation $C_n$ émis sur la voie n et $s_n(i)$ est le i-ème symbole émis sur la voie $n$ ;
- $\delta f_n$ est le résidu de porteuse (ou plus généralement, la fréquence) sur la voie $n$. En particulier, ces résidus peuvent être sensiblement égaux ;
- $T_n$ est le temps symbole sur la voie $n$. En particulier, ces temps symbole peuvent être sensiblement égaux ($T_1 \simeq T_2 \simeq \cdots \simeq T_N$) ;
- $\tau_n$ et le temps de retard sur la voie $n$ au niveau de l'unique capteur. Ces temps sont choisis, sans perte de généralité, entre $-T_n$ et 0 ;
- $\eta(\cdot)$ est une perturbation aléatoire.

Le signal composite $y(t)$ est échantillonné à la période $T_e$ :

$$y(i) \triangleq y(iT_e) = \sum_{n=1}^{N} A_n . e^{\imath 2\pi \delta f_n T_e i} \left( \sum_{j=-\infty}^{j=+\infty} h_n(iT_e - jT_n - \tau_n) s_n(j) \right) + \eta(i)$$

$T_e$ est choisie inférieure au double des temps symbole $T_n$, c'est-à-dire que pour tout $1 \le n \le N$, $T_e < 2T_n$. Le bruit numérique $\eta$ est un bruit blanc, gaussien de variance $\sigma^2$.

L'ensemble des paramètres du modèle du signal composite $y(t)$ ci-dessus est noté sous la forme d'un vecteur paramètre $\theta = ([A_n, T_n, \delta f_n, \tau_n]_{n=1..N}, \sigma^2)$.

On considère pour chaque voie $n$ les $J$ symboles directement postérieurs à $i$ et les $J + 1$ symboles directement antérieurs ou concomitants à $i$. On note pour toute voie n, $S_n(i) = \left[ s_{n,j}(i) \right]_{j=1\cdots 2J+1} \in C_n^{2J+1}$ le vecteur constitué de ces symboles et $[S_n(i)]_n \in C_1^{2J+1} \times \cdots \times C_N^{2J+1}$ le regroupement de ces vecteurs.

On note $t_n(i,j)(= t_{n,ij}(T_n, \tau_n))$ l'écart temporel entre le $i$-ème échantillon intercepté et la $j$-ème composante du vecteur $X_n(i)$.

Le signal *y* s'approxime en tronquant les fonctions d'onde selon l'équation

$$y(i) \simeq \sum_{n=1}^{N} A_n . e^{\imath 2\pi \delta f_n T_e i} \left( \sum_{j=1}^{j=2J+1} h_n\big(t_n(i,j)\big) s_{n,j}(i) \right) + \eta(i)$$

On adjoint à chaque constellation $C_n$ une relation d'ordre notée $\prec_n$.

On identifie $C_1^{2J+1} \times \cdots \times C_N^{2J+1}$ à $(C_1 \times \cdots \times C_n)^{2J+1}$ via la bijection

$O: C_1^{2J+1} \times \cdots \times C_N^{2J+1} \to (C_1 \times \cdots \times C_n)^{2J+1}$, $[X_n]_n \to ((O_{1,1}([X_n]), \cdots, O_{1,N}([X_n])), \cdots, (O_{2J+1,1}([X_n]), \cdots, O_{2J+1,n}([X_n])))$, avec pour tout $n, X_n = [x_{n,j}]_{j=1 \cdots 2J+1}$ *et* $O_{j,n}([X_n]_n) = x_{n',j}$

On définit la relation d'ordre $\prec$ sur $C_1^{2J+1} \times \cdots \times C_N^{2J+1}$ par: pour $U_1 \in C_1^{2J+1} \times \cdots \times C_N^{2J+1}, U_2 \in C_1^{2J+1} \times \cdots \times C_N^{2J+1}$ :

$$U_1 \prec U_2 \ (j_0, n_0), \forall j < j_0, \forall n, O_{j,n}(U_1) = O_{j,n}(U_2) \text{ et } \forall n < n_0, O_{j_0,n}(U_2)$$
$$= O_{j_0,n} \text{ et } O_{j_0,n_0}(U_1) \prec_{n_0} O_{j_0,n_0}(U_2)$$

La séparation et la démodulation des signaux source $(s_n)_{n=1..N}$ visent à extraire les symboles d'information $(s_n(j))_n$ de chaque signal $(s_n)_{n=1..N}$ à partir du signal composite $y(i)$ observé sur un capteur.

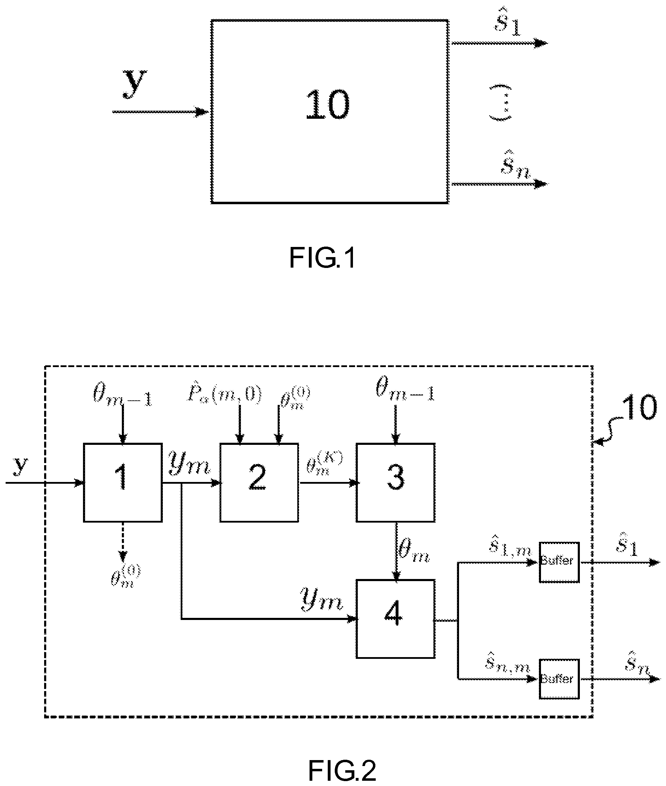

En se référant à la figure 1, des échantillons (ou encore observations) $y(i)$ du signal composite $y$ sont fournis en entrée du système de séparation aveugle **10**.

Le système de séparation aveugle **10** extrait à partir des observations $y(i)$ du signal composite les symboles d'informations $(\hat{s}_n(t))_{n=1..N}$ de chacun des $N$ signaux $(s_n)_{n=1..N}$ compris dans le signal composite $y$.

Cette estimation se fait au sens du Maximum de vraisemblance ; c'est-à-dire que le système de séparation aveugle **10** minimise la fonction suivante:

$$\log P_\theta \big( y(1:I), s_1(1:I), \cdots, s_n(1:I) \big)$$

selon le vecteur paramètre $\theta = ([A_n, T_n, \delta f_n, \tau_n]_{n=1..N}, \sigma^2)$ et les suites $(s_n(1:I))_{n=1..N}$ (où $I$ est un entier naturel supérieur ou égal à un), cette optimisation est réalisée, entre autres, au moyen d'un algorithme EM réalisé sur des approximations particulières de l'espérance de la log-Vraisemblance.

En se référant maintenant à la figure 2, le système de séparation aveugle **10** comprend

- le module de prétraitement **1** configuré pour filtrer, sous-échantillonner et découper, les échantillons $y(i)$ du signal composite $y$, en trames $y_1, \cdots, y_m, \cdots, y_M$ de longueur $I$. Il s'ensuit que des trames $y_1, \cdots, y_m, \cdots, y_M$ sont successivement obtenues en sortie du module de prétraitement **1.** Ce module de prétraitement **1** peut, également, produire une pré-estimation $\theta_m^{(0)}$ du vecteur paramètre $\theta$ quand il est appliqué à la trame $y_1$ ;
- les modules **2-4** sont configurés pour estimer à partir de chaque trame $y_m$ le symbole d'information $(\hat{s}_{n,m})_{n=1..N}$ du signal $(s_n)_{n=1..N}$ émis pendant la durée de la trame $y_m$.

Le module **2** implémente l'algorithme EM par filtrage et lissage particulaire. Ce module **2** fonctionne sur K itérations par trame $y_m$ et donne en sortie un vecteur paramètre $\theta_m^{(K)} = \left( [A_{nm}^{(k)}, T_{nm}^{(k)}, \delta f_{nm}^{(k)}, \tau_{nm}^{(k)}]_{n=1..N}, \sigma_m^{2\,(k)} \right)$ estimé sur la trame $y_m$ du signal composite $y$. Ce module **2** requière la définition de deux paramètres additionnels :

- $\theta_m^{(0)}$ pour initialiser l'estimation récursive du vecteur paramètre $\theta$ ; et
- $\hat{P}_\alpha(m,0)$ qui correspond à une « approximation particulière » du dernier échantillon du signal précédant directement le premier échantillon de la trame $y_m$ (c'est-à-dire, l'échantillon $y_{m-1}(I)$, $I$ étant le nombre d'échantillons par trame). Dans le cas où $m = 1$, cette approximation peut, par exemple, résulter d'un tirage uniforme des états possibles.

Le module **3** réalise le suivi récursif à long terme des paramètres du signal. Ce module **3** prend en entrée le vecteur $\theta_m^{(K)}$ délivré par le module **2** pour la trame $m$ et un vecteur $\theta_{m-1}$, donnant une estimation à long terme des paramètres du signal jusqu'à la trame $m$-1. Ce paramètre $\theta_{m-1}$ provient en général de ce même module **3** dans la trame $m$-1. Le module **3** produit l'estimation à long terme des paramètres $\theta_m$ en combinant linéairement $\theta_m^{(K)}$ et $\theta_{m-1}$.

Un module **4** de démodulation met en oeuvre une variante de l'algorithme de Viterbi Stochastique à partir de la trame $y_m$ courante du signal composite et du vecteur paramètre $\theta_m$ estimé sur le long terme par le module **3**. Ce module **4** de démodulation fournit en sortie une estimation $\hat{s}_{1,m},\cdots,\hat{s}_{N,m}$ des symboles d'information $s_{1,m},\cdots,s_{N,m}$ émis sur la durée de la trame $y_m$ par chacune des voies $s_1,\ldots,s_N$.

Les symboles d'information estimés $\hat{s}_{1,m},\cdots,\hat{s}_{N,m}$ au fil des trames $y_1,\cdots,y_M$, respectivement, sur les voies, $s_1,\cdots,s_N$ sont, respectivement, chargés dans des mémoires tampon (voir « buffer » sur la figure 2) pour former en sortie du système de séparation aveugle **10** des flux de symboles d'information parallèles correspondants aux signaux $s_1,\cdots,s_N$.

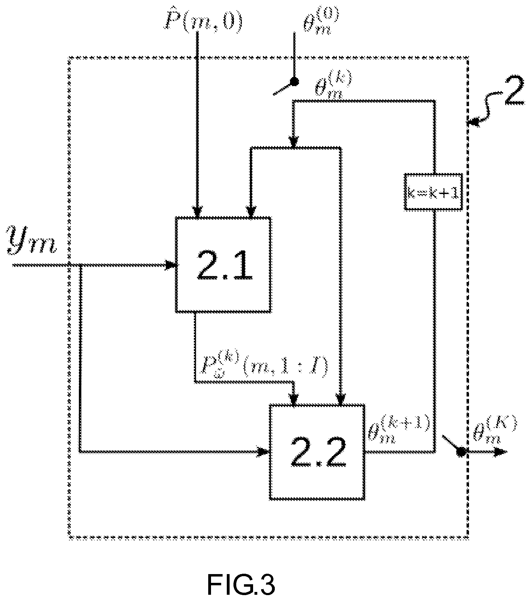

La figure 3 détaille le module **2** pour la mise en oeuvre de l'algorithme EM par filtrage et lissage particulaire et, en particulier, les interactions entre l'étape E mise en oeuvre par le module **2.1** et l'étape M mise en oeuvre par le module **2.2** au fil des itérations $k = 1,\cdots,K$ sur une trame $y_m$. Le module **2** encapsulant l'algorithme EM fournit en sortie une estimation du vecteur paramètre $\theta_m^{(K)}$ sur la trame $y_m$ au bout de $K$ itérations à partir de :

- la trame courante $y_m$ ;
- un jeu de particules noté $\hat{P}_\alpha(m,0)$ approximant le signal à l'échantillon précédant le premier échantillon de la trame $y_m$ ; et
- un vecteur paramètre d'initialisation $\theta_m^{(0)}$ initialisant l'algorithme EM.

A l'itération $k$, le module **2.1** pour la mise en oeuvre de l'étape E calcule à partir de $\hat{P}_\alpha(m,0)$ et du vecteur paramètre $\theta_m^{(k-1)}$ (c.à.d. celui obtenu à l'itération précédente) un jeu de particules noté $\check{P}_\omega(m,1{:}I)$ dérivant de la distribution de lissage sur l'ensemble de la trame $y_m$. Dans le cas où $k = 1$ et $m > 1$, $\theta_m^{(k-1)} = \theta_{m-1}$ (donné par le module 3 sur la trame $y_{m-1}$) ; si $k = 1$ et $m = 1$, $\theta_m^{(k-1)} = \theta_0$ est un vecteur paramètre d'initialisation de l'algorithme EM. Selon les modes de réalisations, il peut être fourni par un opérateur, être choisi aléatoirement ou être un sous-produit du module de prétraitement **1**.

A l'itération $k$, le module **2.2** pour la mise en oeuvre de l'étape M raffine l'estimation de $\theta_m^{(k)}$ en $\theta_m^{(k+1)}$ à partir de la trame $y_m$, de $\theta_m^{(k)}$ et des particules $\check{P}_\omega(m,1{:}I)$ obtenues par le module **2.1** pour la mise en oeuvre de l'étape E (voir figure 3).

A cet égard, à l'itération $k$, l'étape E mise en oeuvre par le module **2.1** évalue l'espérance conditionnelle de la log-vraisemblance des observations :

$$\boldsymbol{L}_{\theta_m^{(k-1)}}(\theta) = \boldsymbol{Esp}\left\{\log \boldsymbol{P}_{\theta_m}\big((y_m(1{:}I),[S_n(1{:}I) = X_n(1{:}I)]_n\,)\,\big|\,[X_n(1{:}I)]_n \sim \boldsymbol{P}_{\theta_m^{(k-1)}}(\cdot\,|y_m(1{:}I))\right\}$$

qui se réécrit

$$\boldsymbol{L}_{\theta_m^{(k-1)}}(\theta) = \sum_i \sum_n \sum_{X_n(i)\in C_n^{2J+1}} \beta_{i,\theta_m^{(k-1)}}([X_n(i)]_n)\cdot \boldsymbol{L}'_{\theta_m}(y_m(i)\,|\,[S_n(i) = X_n(i)]_n)\,\big(+\boldsymbol{L}''(\theta_m)\big)$$

où :

$$\beta_{i,\theta_m^{(k-1)}}([X_n(i)]_n) = \boldsymbol{P}_{\theta_m^{(k-1)}}([S_n(i) = X_n(i)]_n \,|y_m(1),\cdots,y_m(I))$$

est la distribution de lissage et

$$L'_\theta(y_m(i)\,|\,[X_n(i) = X_n]_n) = \left| y_m(i) - \sum_{n=1}^{N} A_n e^{2\pi i\,\delta f_n T_e i} \sum_{j=0}^{j=2J} x_{n,ij} h_n(t_{n,ij}(T_n,\tau_n)) \right|^2 /2\sigma^2$$

$L''$ est un terme non-nécessaire à la variante de l'étape M mise en oeuvre par le module **2.2**. Ce terme $L''$ n'a donc pas besoin d'être calculé. Dans la suite, l'indice m de la trame $y_m$ est sous-entendu pour alléger les notations.

$L_{\theta(k)}(\theta)$ se calcule au moyen d'une approximation particulaire. Une approximation particulaire est une écriture parcimonieuse de l'espace d'état adaptée à l'évaluation de $L_{\theta(k)}(\theta)$ dans le sens où le nombre de points d'évaluation est très petit par rapport aux dimensions de l'espace d'état. On considère deux types d'approximations particulaires.

Selon une première approximation particulaire, dite simple, une approximation particulaire de la distribution de filtrage $\boldsymbol{P}_{\theta(k)}([X_n(i)]_n|y(1),\cdots,y(i))$ s'écrit

$$\boldsymbol{P}_{\theta^{(k)}}([X_n(i)]_n\,|y(1),\cdots,y(i)) \simeq \sum_{r}^{R} \xi_{r,i}\,\delta([X_n(i)]_n - [Z_{n,r}(i)]_n)$$

où :

- $R$ est un entier appelé nombre maximal de particules donné à l'initialisation de cette méthode particulaire;
- pour tout i et pour tout $r \le R$, $\xi_{r,i}$ est un réel entre 0 et 1 appelé poids de filtrage ;
- pour tout i, $\sum_r \xi_{r,i}$ = 1 ;
- pour tout n, tout i et tout $r \le R$, $\left[Z_{n,r}(i)\right]_n = \left[\left(z_{n,r,j}(i)\right)_j\right]_n \in C_n^{2J+1}$ est un vecteur de symboles appelé support de l'approximation particulaire.

Le filtrage particulaire selon cette première méthode particulaire est le calcul récursif de $\boldsymbol{P}_{\theta(k)}([X_n(i)]_n|y(1),\cdots,y(i))$ pour tout i selon l'approximation ci-dessus.

De la même façon, une approximation particulaire simple de la distribution de lissage $\beta_{i,\theta(k)}([X_n(i)]_n) = \boldsymbol{P}_{\theta(k)}([X_n(i)]_n|y(1),\cdots,y(I))$ est une écriture de la forme:

$$\beta_{i,\theta^{(k)}}([X_n(i)]_n) \simeq \sum_{r}^{R} \omega_{r,i}\,\delta([X_n(i)]_n - [Z'_{n,r}(i)]_n)$$

où :

- pour tout i et pour tout $r \le R$, $\omega_{r,i}$ un réel entre 0 et 1 appelé poids de lissage ;
- pour tout i, $\sum_r \omega_{ri}$, = 1 ;
- pour tout n, tout i et tout $r \le R$, $\left[Z'_{n,r}(i)\right]_n = \left[\left(z'_{n,r,j}(i)\right)_j\right]_n \in C_n^{2J+1}$ est un vecteur de symboles appelé support de l'approximation particulaire.

Cette approximation peut, notamment, s'obtenir à partir de l'approximation particulaire de la distribution de filtrage $\boldsymbol{P}_{\theta(k)}([X_n(i)]_n|y(1),\cdots,y(i))$ ci-dessus.

Selon une seconde approximation particulaire, dite multiple, l'approximation particulaire de la distribution de filtrage $\boldsymbol{P}_{\theta(k)}([X_n(i)]_n|y(1),\cdots y(i))$ est une écriture de la forme

$$\boldsymbol{P}_{\theta^{(k)}}([X_n(i)]_n\,|y(1),\cdots,y(i)) \simeq \sum_{r}^{R_{eff}(i)} \xi_{r,i}\cdot\mu_{r,i}\,\delta([X_n(i)]_n - [Z_{n,r}(i)]_n)$$

où :

- $R$ est un entier appelé nombre maximal de particules donné à l'initialisation de cette méthode particulaire ;
- pour tout $i, R_{eff}(i) \leq R$ est un entier appelé nombre effectif de particules à la génération i ;
- pour tout i et pour tout $r \leq R_{eff}(i)$, $\xi_{r,i}$ est un réel entre 0 et 1 appelé poids de filtrage ;
- pour tout i et pour tout $r \leq R_{eff}(i)$, $\mu_{r,i}$ est un entier appelé multiplicité de la particule ;
- pour tout $i$, $\sum_r \mu_{r,i} \xi_{r,i} = 1$ ;

$$\left[Z_{n,r}(i)\right]_n = \left[\left(z_{n,r,j}(i)\right)_j\right]_n \in C_n^{2J+1}$$

- pour tout $n$, tout $i$ et tout $r \leq R_{eff}(i)$, est un vecteur de symboles appelé support de l'approximation particulaire.

Le filtrage particulaire selon cette première méthode particulaire est le calcul récursif de $\boldsymbol{P}_{\theta(k)}([X_n(i)]_n | y(1), \cdots, y(i))$ pour tout $i$ selon l'approximation ci-dessus.

De la même façon, une approximation particulaire multiple de la distribution de lissage $\beta_{i,\theta(k)}([X_n(i)]_n) = P_{\theta(k)}([X_n(i)]_n | y(1), \cdots, y(I))$ est une écriture de la forme:

$$\beta_{i,\theta(k)}([X_n(i)]_n) \simeq \sum_r^{R'_{eff}(i)} \omega_{r,i} \cdot v_{r,i}\, \delta([X_n(i)]_n - [Z'_{n,r}(i)]_n)$$

où :

- pour tout $i$ et pour tout $r \leq R$, $\omega_{r,i}$ est un réel entre 0 et 1 appelé poids de lissage ;
- pour tout $i$ et pour tout $r \leq R_{eff}(i)$, $v_{r,i}$ est un entier appelé multiplicité de la particule ;
- pour tout $i$, $\sum_r \omega_{r,i} v_{r,i} = 1$ ;

$$r \leq R, \left[Z'_{n,r}(i)\right]_n = \left[\left(z'_{n,r,j}(i)\right)_j\right]_n \in C_n^{2J+1}$$

- pour tout $n$, tout i et tout est un vecteur de symboles appelé support de l'approximation particulaire.

Deux modes de réalisation peuvent être suivis: selon le paradigme de la première approximation particulaire ou selon le paradigme de la deuxième (dite approximation particulaire multiple) présentés ci-dessus.

Avantageusement, l'approximation particulaire multiple ci-dessus de la distribution de filtrage, ainsi que celle de la distribution de lissage permettent d'éliminer la redondance des particules. Cette approximation multiple permet, en effet, de passer outre la redondance des particules en rassemblant les particules représentant un même état. Cette approximation particulaire multiple, qui permet de limiter le nombre de particules effectivement calculées et donc de diviser le temps de calcul et l'espace mémoire nécessaire à l'exécution de l'algorithme, est détaillée dans la suite.

Les variables auxiliaires suivantes sont introduites:

- pour tout $i$, on note $\nabla_i : [\![1, R_{eff}(i)]\!] \to [\![1, R_{eff}(i-1)]\!]$ l'application qui à une particule de la génération $i$ désignée par son indice $r$ associe une particule de la génération $i$ - 1 appelée son ancêtre $\nabla_i(r)$ ;
- pour tout $i$ et toute voie $n$, on se donne une variable $\pi_{n,i} \in \{0,1\}$ appelée indicatrice de saut ;
- pour tout $i$ et tout $r \in [\![1, R_{eff}(i)]\!]$, on introduit un poids supplémentaire $\alpha_{r,i} \in [0,1]$ appelé poids auxiliaire, notamment tel que pour tout $i, \sum_{r=1}^{R_{eff}(i)} \alpha_{r,i} \cdot \mu_{r,i} = 1$

La définition précise de ces quantités auxiliaires se fera par récurrence dans la spécification complète du déroulement de la méthode pour la séparation aveugle des signaux.

Pour assurer la stabilité des calculs, les poids auxiliaires et les poids de filtrage sont remplacés, respectivement, par leurs logarithmes notés $L\alpha_{r,i}$ et $L\xi_{r,i}$.

Les écarts de temps $t_n(i,j)$ entre l'échantillon $i$ du signal composite $y$ et le $j$-ème échantillon du vecteur de symboles $S_n(i)$ contribuant à $y_m(i)$ sont calculés en même temps que les particules. Les indicatrices de saut, $\pi_{n,i} \in \{0, 1\}$ vaut 1 s'il est nécessaire de considérer l'arrivée d'un nouveau symbole entre les vecteurs $S_n(i - 1)$ et $S_n(i)$ et 0 sinon.

On note les ensembles :

- $$P_\alpha^{(k)}(m, i) = \left( R_{eff}(i), \left[ \pi_{n,i} \right]_n, \left[ \left( t_n(i,j) \right)_j \right]_n, \left( L\alpha_{r,i}, L\xi_{r,i}, \mu_{r,i}, \left[ Z_{n,r}(i) \right]_n, \nabla_i(r) \right)_r \right)$$ (appelé approximation auxiliaire de l'échantillon *i*) ;

- $$P_\xi^{(k)}(m, i) = \left( R_{eff}(i), \left[ \pi_{n,i} \right]_n, \left[ \left( t_n(i,j) \right)_j \right]_n, \left( L\xi_{r,i}, \mu_{r,i}, \left[ Z_{n,r}(i) \right]_n, \nabla_i(r) \right)_r \right)$$ (appelé approximation particulaire de la distribution de filtrage en *i*) ;

- $$P_\omega^{(k)}(m, i) = \left( R'_{eff}(i), \left[ \left( t_n(i,j) \right)_j \right]_n, \left( \omega_{r,i}, \nu_{r,i}, \left[ Z'_{n,r}(i) \right]_n \right)_r \right)$$ (appelé approximation particulaire de la distribution de lissage en *i*).

On définit sous le même format des ensembles de particules multiples supplémentaires :

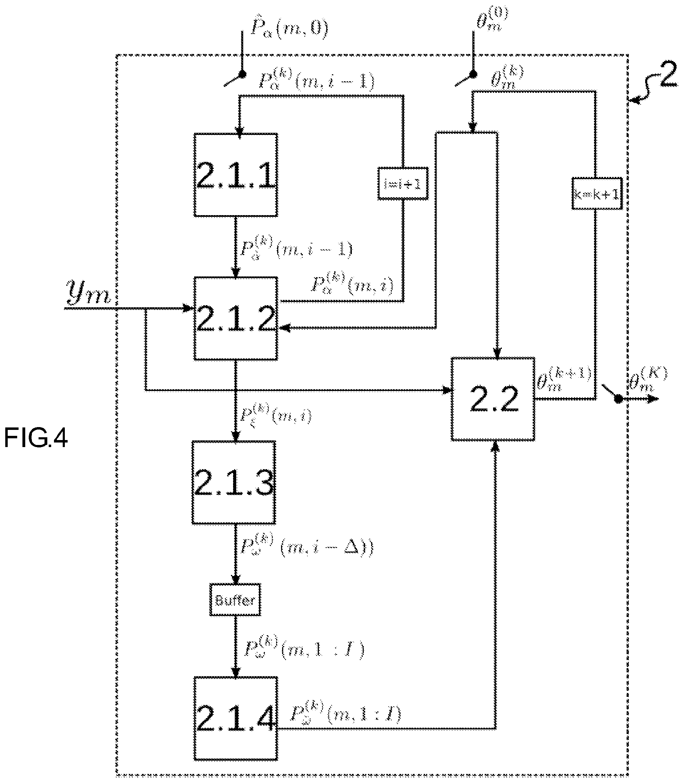

- $$P_{\dot\alpha}^{(k)}(m, i) = \left( \dot R_{eff}(i), \left[ \pi_{n,i} \right]_n, \left[ \left( t_n(i,j) \right)_j \right]_n, \left( L\dot\alpha_{r,i}, L\dot\xi_{r,i}, \dot\mu_{r,i}, \left[ \dot Z_{n,r}(i) \right]_n, \dot\nabla_i(r) \right)_r \right)$$ produit par le module 2.1.1 de la figure 4 et utilisé par le module 2.1.2 (appelé approximation auxiliaire rééchantillonnée) ;

- $$P_{\breve\omega}^{(k)}(m, i) = \left( \breve R_{eff}(i), \left[ \left( t_n(i,j) \right)_j \right]_n, \left( \breve\omega_{r,i}, \breve\nu_{r,i}, \left[ \breve Z_{n,r}(i) \right]_n \right)_r \right)$$

produit par le module **2.1.4** de la figure 4 et utilisé par le module **2.2** (appelé approximation mélangée de la distribution de lissage en *i*).

Ces ensembles sont les unités d'échange de données entre les sous modules constituant l'algorithme EM particulaire mis en oeuvre par les modules **2.1.1-2.1.4** et **2.2** de la figure 4. Notons que dans le détail de ces ensembles, les indices de trame $y_m$ et d'itération $k$ ont été sous-entendus pour alléger les notations. On utilise la notation

$$P_\omega^{(k)}(m, 1:I)$$ (respectivement

$$P_{\breve\omega}^{(k)}(m, 1:I)$$

) pour désigner l'ensemble constitué de $P_\omega^{(k)}(m, 1), \cdots, P_\omega^{(k)}(m, I)$ (respectivement

$$P_{\breve\omega}^{(k)}(m, 1), \cdots, P_{\breve\omega}^{(k)}(m, I))$$

Les ensembles $P_\alpha(m,i)$ et $P_\xi(m,i)$ ont de plus la propriété d'être classés selon l'ordre lexicographique sur $C_1^{2J+1} \times \cdots \times C_n^{2J+1} \simeq (C_1 \times \cdots \times C_n)^{2J+1}$ : pour tout

$$r, \dot r \in \llbracket 1, R_{eff}(i) \rrbracket, r \le \dot r \Rightarrow \left[ Z_{n,r}(i) \right]_n \lessgtr \left[ Z_{n,\dot r}(i) \right]_n.$$

Dans la méthode présentée, un calcul de la forme $\log\sum_{i \in I} e^{b_i}, b_i < 0$ est effectué à de nombreuses reprises. Une réalisation naïve de ce calcule lève des cas de divergences. On introduit, donc, une procédure numérique appropriée, détaillée ci-dessous. Un calcul de la forme $\log\sum_{i \in I} e^{b_i}$ réalisé avec cette procédure est dans la suite représenté symboliquement par $\sum_{i \in I}^* b_i$.

- Si *I* = Ø, $\sum_{i \in I}^* b_i = 0$
- Si *I* = Ø, soit *i*\* = argmax$_{i \in I} b_i$

$$\sum_{i \in I}^{*} b_i = b_{i^*} + \text{log1p}\left(exp\left\{\sum_{i \in I \setminus i^*}^{*}(b_i - b_{i^*})\right\}\right)$$

(log1p($\cdot$) est une fonction standard des bibliothèques de calcul numérique, réalisant avec précision l'évaluation de $log(1 + \varepsilon)$ quand $|\varepsilon| \ll 1$).

Les méthodes d'estimation particulaire mettent en jeu un noyau de transition (fonction de l'espace d'état au carré dans l'intervalle [0,1]).

Comme les fonctions d'onde sont susceptibles de ne pas être causaux, les noyaux de transitions étudiés et utilisés dans les documents cités dans l'état de la technique ne sont donc pas appropriés au problème qui nous intéresse ici.

On se donne un entier $\delta$ de l'ordre de $J \cdot \max T_n / T_e$. On définit pour tout $i$

$$W_i([X_n(i)]_n, [X_n(i-1)]_n) =$$
$$\sum_{[X_n(i+1)]_n} \cdots \sum_{[X_n(i+\delta)]_n} \boldsymbol{P}_{\theta^{(k)}}(y_i, \cdots, y_{i+\delta}, [X_n(i-1)]_n, [X_n(i)]_n, \cdots, [X_n(i+\delta)]_n),$$

$$W_i([X_n(i-1)]_n) = \sum_{[X_n(i)]_n} W_i([X_n(i)]_n, [X_n(i-1)]_n)$$

et $w_i([X_n(i)]_n, [X_n(i-1)]_n) = W_i([X_n(i)]_n, [X_n(i-1)]_n)/W_i([X_n(i-1)]_n)$ qui est un noyau de transition de $C_1^{2J+1} \times \cdots \times C_n^{2J+1}$ dans lui-même.

Des approximations de type Monte-Carlo sont utilisées en pratique pour évaluer ce noyau.

Le module **2**, et en particulier le module **2.1** réalisant l'étape E, se décompose en sous modules comme détaillé dans la figure 4

- pour chaque itération $k$

  ○ pour chaque échantillon $i$

  • le module **2.1.1** correspond à une étape de rééchantillonnage des particules qui prend en entrée l'ensemble de particules $P_\alpha^{(k)}(m, i-1)$ et donne en sortie l'ensemble de particules rééchantillonnées $P_{\dot\alpha}^{(k)}(m, i-1)$ ;

  • le module **2.1.2** correspond à une étape de filtrage particulaire qui prend en entrée $P_{\dot\alpha}^{(k)}(m, i)$, la trame $y_m$, l'estimation du vecteur paramètre $\theta_m^{(k)}$ obtenue à l'itération précédente et qui donne en sortie la distribution de filtrage $P_\xi^{(k)}(m, i)$ pour l'échantillon $i$ ainsi que l'approximation auxiliaire $P_\alpha^{(k)}(m, i)$ pour l'échantillons $i$ ;

  • le module **2.1.3** correspond à une étape de lissage particulaire. Dans un mode de réalisation, cette étape de lissage particulaire met en oeuvre un algorithme dit « fixed-lagg smoothing » qui prend en entrée la distribution de filtrage $P_\xi^{(k)}(m, i)$ de l'échantillon i et donne en sortie la distribution de lissage $P_\omega^{(k)}(m, i-\Delta)$ de l'échantillon $i - \Delta$, $\Delta$ étant un paramètre entier défini à l'instanciation du système ;

  ○ les distributions de lissage $P_\omega^{(k)}(m, i-\Delta)$ pour $i = 1, \cdots, I$ sont agrégés dans un buffer (voir figure 4) afin de produire en sortie la distribution de lissage de la trame entière $P_\omega^{(k)}(m, 1:I)$ ;

∘ le module **2.1.4** correspond à une étape facultative dite de mélange stochastique qui transforme $P_{\omega}^{(k)}(m, 1{:}I)$ en

$$P_{\widetilde{\omega}}^{(k)}(m, 1{:}I)$$

(éventuellement

$$P_{\widetilde{\omega}}^{(k)}(m, 1{:}I) = P_{\omega}^{(k)}(m, 1{:}I)$$

) ;
∘ le module **2.2** réalise l'étape M à partir de la trame $y_m$ et des particules

$$P_{\widetilde{\omega}}^{(k)}(m, 1{:}I)$$

et fournit après K itérations la sortie définitive du vecteur paramètre $\theta_m^{(K)}$ du module **2** pour la trame $y_m$.

Dans les descriptions des sous-modules **2.1.1** à **2.1.4,** les indices de trame m et d'itération *k* sont sous-entendus.
L'algorithme mis en oeuvre dans le module **2.1.1** de rééchantillonnage comprend:

- en entrée du module 2.1.1:
  ∘

$$P_{\alpha}^{(k)}(m, i-1) = \left(R_{eff}(i-1), \left[\pi_{n,i-1}\right]_n, \left[\left(t_n(i-1,j)\right)_j\right]_n, \left(L\alpha_{r,i-1}, L\xi_{r,i-1}, \mu_{r,i-1}, \left[Z_{n,r}(i-1)\right]_n, \nabla_{i-1}(r)\right)_r\right)$$

- tirer la variable $(\Upsilon_1, \cdots, \Upsilon_{R_{eff}(i-1)}) \sim \text{Mult}_R(\alpha_{1,i-1} \cdot \mu_{1,i-1}, \cdots, \alpha_{R_{eff}(i-1),i-1} \cdot \mu_{R_{eff}(i-1),i-1})$
- poser $\dot{R}_{eff}(i-1) = \text{card}\{r \in [\![1, R_{eff}(i-1)]\!], \Upsilon_r > 0\}$
- définir: $\varepsilon_0 \colon [\![1, \dot{R}_{eff}(i-1)]\!] \to [\![1, R_{eff}(i-1)]\!]$ par $\varepsilon_0(\dot{r}) = \inf\{r, \sum_{r' \leq r} \min(\Upsilon_{r'}, 1) \geq \dot{r}\}$
- pour tout $1 \leq \dot{r} \leq \dot{R}_{eff}(i-1)$, poser :

  ∘ pour tout $1 \leq n \leq N$,
  ∘ $\dot{Z}_{n,\dot{r}}(i-1) = Z_{n,\varepsilon_0(\dot{r})}(i-1)$
  ∘ $L\dot{\alpha}_{\dot{r},i-1} = \log 1/R$
  ∘ $\dot{\mu}_{\dot{r},i-1} = \Upsilon_{\varepsilon_0(\dot{r})}$
  ∘ $L\dot{\Xi}_{\dot{r},i-1} = L\xi_{\varepsilon_0(\dot{r}),i-1} - L\alpha_{\varepsilon_0(\dot{r}),i-1}$
  ∘ $\dot{\nabla}_{i-1}(\dot{r}) = \varepsilon_0(\dot{r})$

- en sortie du module **2.1.1** :

$$P_{\dot{\alpha}}^{(k)}(m, i-1) =$$

$$\left( \dot{R}_{eff}(i- \right.$$

$$\left. 1), [\pi_{n,i-1}]_n, \left[ (t_n(i-1,j))_j \right]_n, \left( L\dot{\alpha}_{r,i-1}, L\dot{\Xi}_{r,i-1}, \dot{\mu}_{r,i-1}, [\dot{Z}_{n,r}(i-1)]_n, \dot{\nabla}_{i-1}(r) \right)_r \right)$$

L'algorithme mis en oeuvre par le module **2.1.2** d'échantillonnage de la nouvelle génération comprend :

- en entrée du module **2.1.2** du module d'échantillonnage:

$$P_{\dot{\alpha}}^{(k)}(m, i-1) =$$

$$\left( \dot{R}_{eff}(i-1), [\pi_{n,i-1}]_n, \left[ (t_n(i-1,j))_j \right]_n, \left( L\dot{\alpha}_{r,i-1}, L\dot{\Xi}_{r,i-1}, \dot{\mu}_{r,i-1}, [\dot{Z}_{n,r}(i- \right. \right.$$

$$\left. \left. 1)]_n, \dot{\nabla}_{i-1}(r) \right)_r \right)$$

  ○ la trame $y_m$

  ○ le vecteur paramètre $\theta_m^{(k-1)}$

- mise à jour des écarts de temps et des indicateurs de saut :

  ○ pour toute voie n et tout indice j, $\tilde{t}_n(i,j) = t_n(i-1,j)-T_e$

  ○ si $\tilde{t}_n(i,J) \leq 0$, pour tout $j, t_n(i,j) = \tilde{t}_n(i,j) + T_n^{(k)}$ et $\pi_{n,i} = 1$

  ○ sinon pour tout $j, t_n(i,j) = \tilde{t}_n(i,j)$ et $\pi_{n,i} = 0$

  ○ poser $\kappa = \{\kappa_1, \cdots, \kappa_K\} = \{1 \leq n \leq N, \pi_{n,i} = 1\}$ et $\bar{\kappa} = \{\bar{\kappa}_1, \cdots, \bar{\kappa}_K\} = \{1 \leq n \leq N, \pi_{n,i} = 0\}$.

- pour tout $r \leq \dot{R}_{eff}(i\text{-}1)$,

  - pour tout $d(\kappa_1, \cdots, \kappa_K) = (d_{\kappa 1}, \cdots, d_{\kappa K}) \in C_{\kappa 1} \times \cdots \times C_{\kappa K}$

    - pour tout $n \in [\![1, N]\!]$,

      - définir $Z_{n,r,d(\kappa 1, \cdots, \kappa K)}(i) = \dot{Z}_{n,r}(i\text{-}1)$ si $n \notin \kappa$
      - $Z_{n,r,d(\kappa 1, \cdots, \kappa K)}(i) = [d_{\kappa \blacksquare}, \dot{z}_{n,r,2}(i\text{-}1), \cdots, \dot{z}_{n,r,2J}(i\text{-}1)]$ si $n = \kappa_\blacksquare \in \kappa$
      - calculer $LW_i([Z_{n,r,d(\kappa 1, \cdots, \kappa K)}(i)]_n | \dot{Z}_{n,r}(i\text{-}1))$

    - calculer $LW_i\left([Z_{n,r}(i-1)]_n\right) = \sum_{d(\kappa_1, \cdots, \kappa_K)}^{*} LW_i\left([Z_{n,r,d(\kappa_1, \cdots, \kappa_K)}(i)]_n | \dot{Z}_{n,r}(i-1)\right)$
    - normaliser: pour tout $d(\kappa_1, \cdots, \kappa_K), Lw_i([Z_{n,r,d(\kappa_1, \cdots, \kappa_K)}(i)]_n | \dot{Z}_{n,r}(i\text{-}1)) = LW_i([\dot{Z}_{n,r,d(\kappa_1, \cdots, \kappa_K)}(i)]_n | \dot{Z}_{n,r}(i\text{-}1)) - LW_i([Z_{n,r}(i)]_n)$
    - tirer la variable $(\rho_{d(\kappa_1, \cdots, \kappa_K)}) \sim \text{Mult}_{\mu_{r,i-1}}(w_i([Z_{n,r,d(\kappa_1, \cdots, \kappa_K)}(i)]_n | \dot{Z}_{n,r}(i\text{-}1)))$
    - poser pour tout $r, R_{eff}(r,i) = \text{card} \{d(\kappa_1, \cdots, \kappa_K), \rho_{d(\kappa 1, \cdots, \kappa K)} > 0\}$
    - définir la bijection

$$\epsilon_{1,r}: [\![1, R_{eff}(r,i)]\!] \to \kappa, \epsilon_{1,r}(\dot{r}) = \inf\{d(\kappa'), \kappa' \in \kappa, \sum_{d(\kappa'') \preccurlyeq d(\kappa')} \rho_{d(\kappa'')} \geq \dot{r}\}$$

    - noter pour tout n, tout $\dot{r} \in [\![1, R_{eff}(r,i)]\!]$

      ° $Z_{n,(r,\dot{r})}(i) = Z_{n,r,\in 1,r(\dot{r})}(i)$
      ° $LA_{n,(r,\dot{r}),i} = LW_i([Z_{n,r}(i-1)]_n)$
      ° $\mu_{n,(r,\dot{r}),i} = \rho_{\varepsilon 1,r}(r)$
      ° $L\Xi_{n,(r,\dot{r}),i} = L\Xi_{n,r,i-1} + \log P_{\theta(k)}(y(i)|[Z_{n,(r,\dot{r}),i}]_n) - LA_{n,(r,\dot{r}),i}$
      ° $\nabla_i(r,r) = \dot{\nabla}(r)$

- Poser $R_{eff}(i) = \sum_{r}^{\mathring{R}_{eff}(i-1)} R_{eff}(r, i)$

- définir la bijection $(0_1, 0_2): [\![1, R_{eff}(i)]\!] \rightarrow \bigcup_{r=1}^{r \leq \mathring{R}_{eff}(i-1)} \{r\} \times [\![1, R_{eff}(r, i)]\!]$ une permutation telle que $r_1$ $\leq r_2 \Rightarrow [Z_{n,(O_1(r_1),O_2(r_1))}(i)]_n \leqslant [Z_{n,(O_1(r_2),O_2(r_2))}(i)]_n$

- pour tout $r \leq R_{eff}(i)$,,

   ○ $[Z_{n,r}(i)]_n = [Z_{n,(O_1(r),O_2(r))}(i)]_n$
   ○ $LA_{r,i} = LA_{(O_1(r),O_2(r)),i}$
   ○ $\mu_{r,i} = \mu_{(O_1(r),O2(r)),i}$
   ○ $L\Xi_{r,i} = L\Xi_{(O_1(r),O_2(r)),i}$
   ○ $\nabla_i(r) = \nabla_i(O_1(r),O_2(r))$

- normaliser les poids: pour tout $r$,

   - $LA_i = \sum_r^* LA_{r,i}$

   - $L\Xi_i = \sum_r^* L\Xi_{r,i}$

   - $L\alpha_{r,i} = LA_{r,i} - LA_i$
   - $L\xi_{r,i} = L\Xi_{r,i} - L\Xi_i$

- en sortie :

$$P_\xi^{(k)}(m, i) = \left( R_{eff}(i), [\pi_{n,i}]_n, \left( L\xi_{r,i}, \mu_{r,i}, [Z_{n,r}(i)]_n, \nabla_i(r) \right)_r \right)$$

est la distribution de filtrage de l'échantillon i ;

$$P_\alpha^{(k)}(m, i) = \left( R_{eff}(i), [\pi_{n,i}]_n, \left( L\alpha_{r,i}, L\xi_{r,i}, \mu_{r,i}, [Z_{n,r}(i)]_n, \nabla_i(r) \right)_r \right)$$

est la distribution auxiliaire de l'échantillon i.

Pour l'étape de lissage mise en oeuvre par le module **2.1.3** (figure 4), la méthode connue sous le nom de « fixed-lag smoothing » est par exemple utilisée. On se donne un entier $\Delta$,

- en entrée, la distribution de filtrage de l'échantillon i :

$$P_\xi(m, i) = \left( R_{eff}(i), [\pi_{n,i}]_n, \left( L\xi_{r,i}, \mu_{r,i}, [Z_{n,r}(i)]_n, \nabla_i(r) \right)_r \right)$$

- poser $\nabla_{i,0}(r) = \nabla_i(r)$
- pour tout $1 \leq j \leq \Delta$
   ○ $\nabla_{i,j}(r) = \nabla_{i-j}(\nabla_{i,j-1}(r))$
- poser $R'_{eff}(i - \Delta) = R_{eff}(i)$
- poser pour tout $r \leq R_{eff}(i)$,

   ○ $v_{r,i-\Delta} = \mu_{r,i}$
   ○ $\omega_{r,i-\Delta} = \xi_{r,i}$
   ○ $[Z'_{n,r}(i - \Delta)]_n = [Z_{n,\nabla_{i,\Delta}(r)}(i)]_n$

- en sortie, l'ensemble $P_\omega(m,i-\Delta) = (R'_{eff}(i-\Delta),(\omega_{r,i-\Delta},v_{r,i-\Delta},[Z'_{n,r}(i-\Delta)]_n)_r)$ est une approximation particulière de la distribution de lissage en $i - \Delta$.

Le module **2.1.4** est configuré pour mettre en oeuvre une étape de mélange stochastique des particules obtenues par le module **2.1.3**. Il prend, donc, en entrée l'ensemble des particules lissées $P_\omega(m,1{:}I)$ en renvoie un nouvel ensemble de particules noté $\check{P}_\omega(m,1{:}I)$. Ce module **2.1.4** permet de s'immuniser contre les risques de convergences vers un optimum local de l'algorithme EM. Il consiste, pour tout i, à ne retenir de $P_\omega(m,i)$ qu'une seule particule tirée au sort. Il est à noter que, si cette étape est appliquée à chaque itération $k$ de chaque trame $y_m$, l'algorithme devient instable. On ne l'applique, donc, qu'à certains couples $(m,k)$, ceux qui appartiennent à un ensemble It, cet ensemble étant pour être de moins en moins dense avec l'évolution de $(m,k)$. Par exemple, on peut considérer It tel que, $(m,k) \in$ It ssi $(m-1) \cdot K + k$ est le carré d'un entier. La procédure mise en oeuvre dans ce module est :

$$P_\omega^{(k)}(m, 1{:}I) = \left( \left( R'_{eff}(i), \left[ \left( t_n(i,j) \right)_j \right]_n, \left( \omega_{r,i}, v_{r,i}, \left[ Z'_{n,r}(i) \right]_n \right)_r \right) \right)_{i=1\cdots I}$$

- en entrée: est l'approximation de la distribution de lissage ;
- si $(m,k) \in$ **It**

  ○ pour tout $i \in \llbracket 1,I \rrbracket$
  ○ poser $\check{R}_{eff}(i) = 1$

  ○ tirer un indice $r_0$ dans $\llbracket 1,R'_{eff}(i) \rrbracket$ avec une probabilité proportionnelle à $\omega_{i,r_0} \cdot v_{i,r_0}$
  ○ poser $\check{\omega}_{1,i} = 1$, $\check{v}_{1,i} = 1$ et $[\check{Z}_{n,1}(i)]_n = [Z'_{n,r_0}(i)]_n$

- si $(m,k) \notin$ **It**

  ○ pour tout i ∈
  ○ poser $\check{R}_{eff}(i) = R'_{eff}(i)$

  ○ pour tout r ∈ $\llbracket 1,\check{R}_{eff}(i) \rrbracket$
  ○ poser $\check{\omega}_{r,i} = 1$, $\check{v}_{r,i} = 1$ et $[\check{Z}_{n,r}(i)]_n = [Z'_{n,r}(i)]_n$

- en sortie : $\check{P}_\omega(m,1{:}I) = (((\check{R}_{eff}(i),[(t_n(i,j))]_n,(\check{\omega}_{r,i},\check{v}_{r,i},[\check{Z}_{n,r}(i)]_n)_r)))_{i=1\cdots I}$ est l'approximation mélangée de la distribution de lissage.

Le module **2.2,** mis en évidence sur les figures 3 et 4, correspond à l'étape M de l'algorithme EM.

A l'itération $k$, il prend en entrée la trame de signal $y_m$, le vecteur paramètre $\theta_m^{(k-1)}$ estimé à l'itération précédente et les particules mélangées $\check{P}_\omega(m,1{:}I)$ obtenues en fin de l'étape E (c.à.d. par le module **2.1** et en particulier le sous module **2.1.4**). Il donne en sortie une estimation raffinée $\theta_m^{(k)}$ du vecteur paramètre.

Cette estimation est choisie pour faire décroitre l'espérance conditionnelle de la log-vraisemblance des observations selon le vecteur paramètre $\theta$:

$$L_{\theta_m^{(k-1)}}\left(\theta_m^{(k)}\right) < L_{\theta_m^{(k-1)}}\left(\theta_m^{(k-1)}\right).$$

De nombreuses méthodes peuvent être envisagées à cet effet. Dans un mode de réalisation, la procédure suivante est mise en place:

On note le vecteur paramètre $\theta_m^{(k)}$ estimé à la $k$-ème itération sur la $m$-ème trame

$$\theta_m^{(k)} = \left( [A_{nm}^{(k)}, T_{nm}^{(k)}, \delta f_{nm}^{(k)}, \tau_{nm}^{(k)}]_{n=1..N}, \sigma_m^{2\,(k)} \right) \qquad \theta_m^{(k)} = \left( \theta_{m,l}^{(k)} \right)_{l=1,\cdots,L}$$

sous la forme où $L$ est le nombre total de paramètres à estimer. La permutation entre les paramètres et les indices $l$ peut être quelconque, voire aléatoire et différente à chaque itération.

- on note $\theta_m^{(k,0)} = \theta_m^{(k-1)}$
- pour tout l, $1 \leq l \leq L$
- on actualise le l-ème paramètre selon

$$\theta_l^{(k)} = \theta_l^{(k-1)} - \lambda \cdot \frac{\sum_i \sum_r \breve{\omega}_{r,i} \breve{v}_{r,i} \left.\frac{\partial \boldsymbol{L'}_\theta}{\partial \theta_l}\right|_{\theta = \theta^{(k,l-1)}} (\mathrm{y}(i) | [\breve{Z}_{n,r,i}]_\mathrm{n})}{\sum_i \sum_r \breve{\omega}_{r,i} \breve{v}_{r,i} \left.\frac{\partial^2 \boldsymbol{L'}_\theta}{\partial \theta_l^2}\right|_{\theta = \theta^{(k,l-1)}} (\mathrm{y}(i) | [\breve{Z}_{n,r,i}]_\mathrm{n})}$$

- on pose : $\theta^{(k,l)} = \left(\theta_1^{(k)}, \cdots, \theta_{l-1}^{(k)}, \theta_l^{(k-1)}, \theta_{l+1}^{(k-1)}, \cdots, \theta_L^{(k-1)}\right)$ et

- on obtient en sortie $\theta_m^{(k)} = \theta_m^{(k,L)}$

Les dérivées d'ordre 1 et 2 sont calculées analytiquement. Le paramètre $\lambda \in ]0,1]$ permet d'ajuster la vitesse de convergence de l'algorithme. Il est éventuellement différent pour chaque paramètre.

Eventuellement, si certains paramètres du système sont connus a priori avec certitude, ils peuvent être considérés à profit comme constants dans l'algorithme et ne sont pas actualisés dans l'étape M. Dans ce cas-là, la convergence de l'algorithme est accélérée et la variance résiduelle due à l'estimation de ces paramètres est neutralisée.

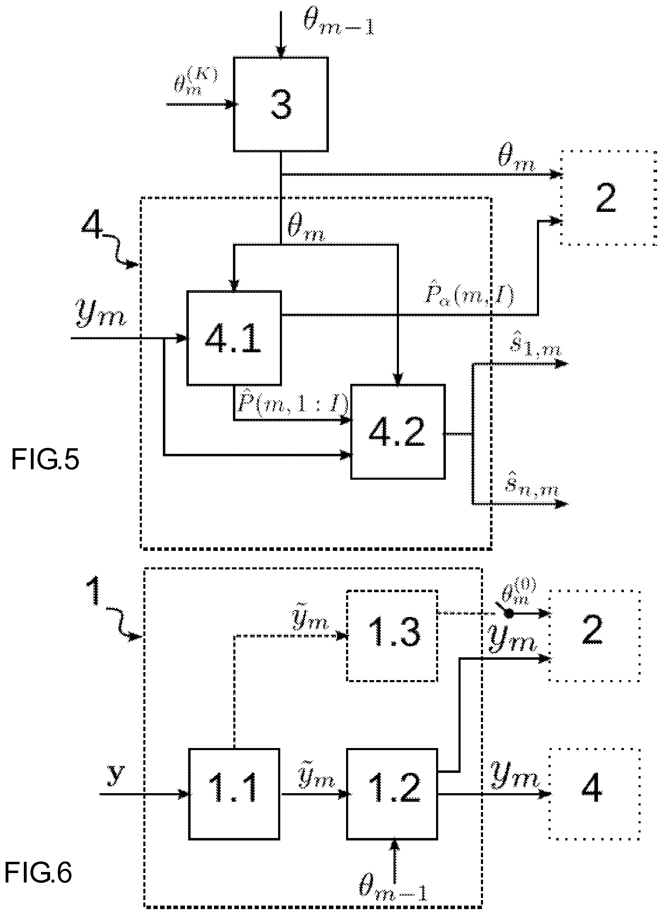

La figure **5** détaille les interactions entre le module **3** pour le suivi à long terme du vecteur paramètre $\theta$ du signal composite **y** et le module **4** de démodulation.

Le module **3** pour le suivi à long terme du vecteur paramètre $\theta$ forme une estimation $\theta_m$ du vecteur paramètre $\theta$ en combinant linéairement toutes les estimations obtenues des vecteurs paramètres $\theta_1^{(K)}, \theta_2^{(K)}, \cdots, \theta_m^{(K)}$ par l'algorithme EM (mise en oeuvre par le module **2**) sur les trames $y_1$ à $y_m$.

Cette estimation peut notamment se faire récursivement à partir de :

- $\theta_m^{(K)}$ le vecteur paramètre estimés pour la trame $y_m$ sur $K$ itérations par le module **2** et en particulier par le module **2.2** ; et de

- $\theta_{m-1}$ le vecteur paramètre estimé à long terme par le module **3** pour le suivi à long terme du vecteur paramètre $\theta$ sur la trame précédente si $m > 1$ ou éventuellement par le module d'amorçage **1.3** si $m = 1$.

A la convergence de l'algorithme EM sur la trame $y_m$, tous les estimateurs de paramètres ont une variance proportionnelle à $\sigma^{2}{}_m^{(K)}$.

On pose donc :

$$\tilde{\gamma}_m = \frac{\gamma \cdot \sigma^{2}{}_m^{(K)}}{\gamma \cdot \sigma^{2}{}_m^{(K)} + \tilde{\sigma}_{m-1}^2}$$

$$\tilde{\sigma}_m^2 = \frac{1}{\dfrac{\gamma}{\tilde{\sigma}_{m-1}^2} + \dfrac{1}{\sigma^{2}{}_m^{(K)}}}, \qquad \tilde{\sigma}_0^2 = +\infty$$

Puis on actualise les paramètres selon :

$$\theta_m = \theta_{m-1} + (1 - \tilde{\gamma}_m) \cdot (\theta_m^{(K)} - \theta_{m-1})$$

Le paramètre de suivi $\gamma$ fixé par l'utilisateur entre 0 et 1 permet de donner de l'élasticité pour prendre en compte l'évolution du canal. Les quantités $\tilde{\gamma}_m$ et $\tilde{\sigma}_m^2$ sont respectivement un paramètre de suivi et une variance modifiés afin de combiner linéairement de façon optimale l'estimation sur la trame $m$ de l'algorithme EM $\theta_m^{(k)}$ et l'estimation à long terme jusqu'à la trame $m$ - 1, $\theta_{m-1}$. Le module **4** de démodulation, détaillé dans la figure 5, démodule les voies. Ce module **4** implémente un algorithme de Viterbi stochastique. Ce module **4** de démodulation produit essentiellement les trames de symboles estimés $\hat{s}_{1,m}, \hat{s}_{2,m}, \cdots, \hat{s}_{N,m}$ pour chacune des voies.

Le module **4** de démodulation comprend deux blocs fonctionnels.

Le sous-module **4.1** est une instanciation de l'étape E de l'algorithme EM, limitée à la reproduction des modules **2.1.1** et **2.1.2** correspondant à l'étape de filtrage particulaire. Ce sous-module **4.1** Il prend en entrée :

- la trame $y_m$ ;
- le vecteur paramètre $\theta_m$ estimé à long terme sur la trame $y_m$ par le module **3** pour le suivi à long terme du vecteur paramètre $\theta$.

Le sous-module **4.1** réalise avec ce vecteur paramètre $\theta_m$ une nouvelle étape de filtrage et produit en sortie :

- un ensemble de particules $\hat{P}(m,1:l)$ à destination du sous-module **4.2.** Cet ensemble peut, selon l'approximation particulaire utilisée, être un ensemble de particules ou un ensemble de particules multiples. Il est à noter que dans cette sortie, les poids de filtrages obtenus ne sont pas utilisés dans la suite ;
- une approximation particulaire auxiliaire $P_\alpha(m,l)$ du dernier échantillon de la trame $y_m$. C'est cette approximation qui sert à initialiser le module **2** et en particulier le module **2.1.1** de la trame $y_{m+1}$ via leur paramètre d'entrée $P_\alpha(m+1,0)$

Le sous-module **4.2** réalise la démodulation des voies par un algorithme de Viterbi stochastique. Il prend en entrée :

- le vecteur paramètre $\theta_m$ estimés à long terme jusqu'à la trame $y_m$ par le module **3** pour le suivi à long terme du vecteur paramètre θ ;
- le support de l'approximation particulaire $\hat{P}(m,1:l)$ de la trame donné par le sous-module **4.1.**

On obtient par l'algorithme de Viterbi stochastique la séquence vectorisée de maximum a posteriori $([\hat{S}_n(i)]_n)$. Les symboles émis sur chaque voie sont estimés par la séquence $(\hat{s}_n(i_n))_{1 \leq i_n < l_n}$ selon la procédure:

- en entrée : les séquences vectorielles de maximum a posteriori : $([\hat{S}_{n,i}]_n)$ et les indicatrices de saut $[\pi_{n,i}]$ pour tout $1 \leq i \leq l$ et tout $1 \leq n \leq N$ ;
- pour tout $n \in [\![1, N]\!]$ ∘ poser $I_n = \sum_{i=1}^{I} \pi_{n,i}$

  ∘ pour tout $i_n \in [\![1, I_n]\!]$

  ∘

$$\hat{\epsilon}(i_n) = \inf\left\{ i \in [\![1, I]\!], \; \sum_{i'=1}^{i} \pi_{n,i'} \geq i_n \right\}$$

  ∘ $\hat{s}_n(i_n) = \hat{S}_{n,1}(\hat{\epsilon}(i_n))$

- en sortie, les séquences $\hat{s}_{n,m} = (\hat{s}_n(i))_{i \in [\![1,l_n]\!]}$ sont une estimation des symboles émis par la voie *n* sur la trame $y_m$.

Le module de prétraitement **1** (voir figure 2) assure, notamment, la formation des trames $y_m$.

Ce module de prétraitement **1** prend en entrée le flux d'information **y.** Dans le cas de l'identification de signaux Double Talk par exemple, les signaux de ce signal composite *y* ne sont pas émis selon des filtres en cosinus surélevé *h* mais selon un filtre en racine de cosinus surélevé $\tilde{h}$. On note dans ce cas $\tilde{y}$ le signal directement observé et modulé par des filtres en racine de cosinus surélevé et *y* le signal filtré qui est manipulé par les modules avals. Il revient, donc, au module de prétraitement **1** de filtrer le signal capté par $\tilde{h}$ pour obtenir un signal mis en forme par *h.*

De plus, au moment de l'interception, les temps symboles sont inconnus, il est nécessaire de sur-échantillonner largement le signal afin d'être sûrs de respecter la condition de Shannon. Une fois les temps symbole connus, il n'est plus nécessaire de manipuler un signal largement sur-échantillonné.

Comme montré sur la figure 6, le module 1 comprend trois sous-modules.

- le sous-module **1.1** assure la « bufferisation » du signal $y$ en observation à son entrée pour former les trames $\tilde{y}_m$ ;
- le sous-module **1.2** procède conjointement au sous-échantillonnage et au filtrage de la trame $\tilde{y}_m$ pour donner en sortie la trame $y_m$ qui est le signal directement manipulé par les autres modules du système de séparation aveugle **10.** Ce sous-module **1.2** utilise la connaissance plus ou moins précise des temps symboles $T_n$ disponible dans le système à travers le vecteur $\theta_{m-1}$ délivré par le module **3** pour le suivi à long terme du vecteur paramètre $\theta$. Pour la première trame, le vecteur paramètre $\theta_0$ est estimé par exemple en aveugle par le sous-module **1.3;**
- le sous-module **1.3** permet de réaliser une première estimation grossière du vecteur paramètre $\theta$. Cette étape est utilisée uniquement sur la première trame du signal et est appelé étape d'amorçage. Par exemple les fréquences peuvent être amorcées à partir de la propriété de circularité des constellations considérées, les temps symbole par la méthode de la raie spectrale, les amplifications par un partage équitable de l'énergie du signal intercepté, les temps de retard et les erreurs de phase qui sont a priori bornés peuvent être pris égaux à 0 ou à des valeurs tirées aléatoirement.

La procédure de filtrage et décimation conjointes du signal mise en oeuvre dans le sous-module d'adaptation **1.2** est la suivante :

$$\tilde{y}_m(i) = \sum_{n=1}^{N} A_n . e^{i2\pi\delta f_N} \left( \sum_{j=-\infty}^{j=+\infty} \tilde{h}_n\left(iT_{e_0} - jT_n - \tau_n\right)s_n(j) \right) +$$

- en entrée: la trame         $\eta(i)$ échantillonnée à la cadence $T_{e0}$ ; $\tilde{h}_n$ est un filtre en racine de cosinus surélevé de temps symbole $T_n$ ; les $T_n$ sont sensiblement égaux ;
- une estimation des temps d'échantillonnage de chaque voie $T_1, \cdots, T_N$ via le paramètre $\theta_{m-1}$ ;

- on pose $T_e = \frac{1}{2} min\, T_n$ et $\tilde{h}$ le filtre en racine de cosinus surélevé de temps symbole $2T_e$ ;
- on filtre et sous-échantillonne conjointement $\tilde{y}_m$ en $y_m$ à la cadence $T_e$ selon l'équation

$$y_m(i) = \frac{T_e}{T_{e0}} \sum_{j} \tilde{y}_m(j) \cdot \tilde{h}(jT_{e0} - iT_e)$$

- en sortie, la trame $y_m$ est donnée en entrée de la chaine de traitement aval.

L'algorithme de séparation proposé est une généralisation de l'algorithme EM calculé sur une approximation particulaire. Cet algorithme est appliqué à un modèle analytique du signal composite pour en extraire les signaux sources. Le décodage est assuré par un algorithme de Viterbi Stochastique.

Le terme temps réel est justifié, ici, dans la mesure où le signal est « bufferisé » en trames de I (100 à quelques milliers) symboles et que la complexité temporelle de l'algorithme de séparation et ses besoins en ressources mémoire sont linéaires selon la taille de la trame. Ainsi il est possible de l'implémenter de telle façon que le temps de traitement d'une trame soit égale au temps d'émission de ses I échantillons quelle que soit la valeur de la taille.

Ainsi la taille des trames peut être adaptée à des signaux dont les paramètres sont constants dans le temps (trames longues) ou à des signaux dont les paramètres varient rapidement dans le temps (trames courtes), le module de suivi à long terme se charge dans ce dernier cas de composer une estimation des paramètres de variance moindre.

Avantageusement, les systèmes et méthodes décrits ci-dessus introduisent la notion de particules avec multiplicité qui permet de limiter grandement le nombre de particules à traiter et donc d'accélérer largement l'exécution de l'algorithme. En effet, avec ce paradigme, le nombre de particules effectif utilisé pour une trame lors d'une itération EM s'adapte automatiquement à la difficulté de ce traitement. Ainsi, sur les premières itérations des premières trames, beaucoup de particules sont effectivement utilisées ; quand la convergence des paramètres est amorcée, ce nombre diminue progressivement avant de se stabiliser à un nombre de particules largement plus petit que celui qui serait nécessaire dans le paradigme classique de filtrage particulaire quand la convergence est acquise.

Avantageusement, les méthodes et systèmes décrits ci-dessus permettent le traitement d'un large éventail de configuration :

- de différents types de modulations (par exemples M-ASK, M-PSK, Q-PSK, M-QAM), le type de modulation peut être différent sur chacune des voies ;
- des bandes de fréquences variées pour les différentes voies, qu'elles soient différentes ou égales (ou sensiblement égales à cause d'erreurs de synchronisation entre les voies à envisager par exemple pour la séparation de signaux Double Talk) ;
- des débits symboles variés pour les différentes voies, qu'ils soient différents ou égaux (ou sensiblement égaux à cause d'erreurs de synchronisation entre les voies, à envisager par exemple pour la séparation de signaux Double Talk) ;

- des gains de transmission au niveau des différentes sources qu'ils soient différents ou sensiblement égaux ;
- de temps de retard et les erreurs de phase sur chaque voie peuvent être quelconques.

Les systèmes décrits sont capables de détecter automatiquement, de combiner de façon optimale et d'exploiter à son avantage toute asymétrie entre les signaux source.

Dans une mise en oeuvre illustrative de la méthode de séparation aveugle décrite ci-dessus, un signal composite comprenant deux signaux « DoubleTalk® Carrier-in-Carrier®» est simulé selon les paramètres suivants :

- le signal y est composé de deux voies : N = 2 ;
- la période d'échantillonnage à l'interception est prise comme unité temporelle de référence : $T_e$ = 1 ;
- les filtres de mise en forme $\tilde{h}_1$ et $\tilde{h}_2$ sont des filtres en racine de cosinus surélevé de roll-off 0.35 ;
- les temps de symboles sont $T_1$ = 2 et $T_2$ = 2 en unités réduites ;
- les résidus de porteuse sont de $\delta f_1$ = 1.10$^{-5}$, $\delta f_2$ = 3.10$^{-6}$ en unités réduites ;
- les décalages de phase sont de $\varphi_1$ = $\pi$/10 et de $\varphi_2$ = $\pi$/4;
- les retards sont $\tau_1$ = -0.3 · $T_1$ et $\tau_2$ = -0.8 · $T_2$ ;
- les deux modulations sont des QPSK;
- les amplifications sont telles que |$A_2$| = 0.95 · |$A_1$|
- le bruit est blanc, gaussien, le rapport entre la puissance moyenne des signaux et celle du bruit est de 20 dB.

Le signal composite simulé est analysé sur 20 trames de taille équivalente à 500 symboles par voie. Après une étape d'adaptation du signal, la méthode de séparation aveugle est instanciée avec les réglages suivants :

- le nombre maximal de particules est fixé à 200 ;
- le paramètre de lissage est $\Delta$ = 40 ;
- le canal est supposé quasi-invariant : $\gamma$ = 0.9 ;
- il y a K = 10 itérations EM par trame.

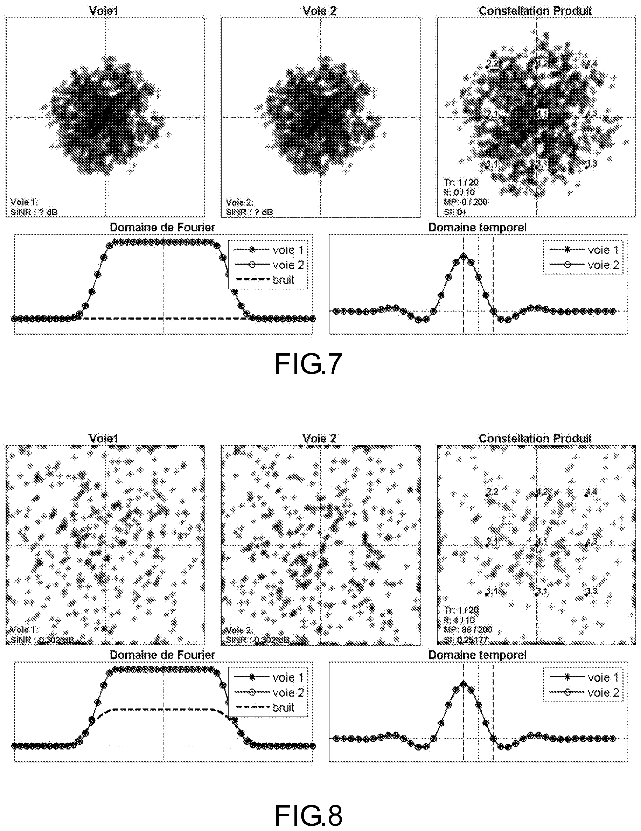

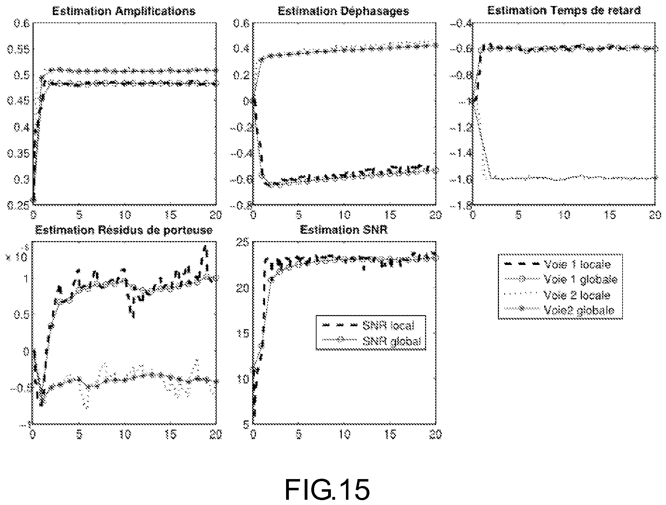

Le déroulement de l'algorithme de séparation sur ce signal composite est montré sur les figures 7 à 14 et sur la figure 15.

Les figures 7 à 14 montrent visuellement les résultats de quelques itérations typiques de l'algorithme, les sous figures représentent respectivement de gauche à droite et de haut en bas :

- une reconstruction de la voie 1 dans le plan complexe (cette reconstruction est obtenue en soustrayant au signal composite l'estimation de la voie 2 et les interférences inter-symboles sur la voie 1. Les niveaux de gris représentent la densité locale des mesures sur la voie 1 reconstruite). La valeur de SINR est une estimation en décibels du rapport entre la puissance du signal sur la voie 1 et toutes les perturbations qui s'y superposent (interférences entre symboles, voie 2 et bruit).

- une reconstruction de la voie 2 (cette reconstruction est obtenue en soustrayant au signal composite l'estimation de la voie 1 et les interférences inter-symboles sur la voie 2. Les niveaux de gris représentent la densité locale des mesures sur la voie 2 reconstruite). La valeur de SINR est une estimation en décibels du rapport entre la puissance du signal sur la voie 2 et toutes les perturbations qui s'y superposent (interférences entre symboles, voie 1 et bruit).

- une reconstruction du signal composite (cette reconstruction est obtenue en soustrayant au signal composite les interférences inter-symboles sur la voie 1 et sur la voie 2. Les niveaux de gris représentent une densité locale de mesures sur le signal composite reconstruit. Les points noirs correspondent à ce que serait le signal composite sans bruit, les couples de chiffres au-dessus de chaque point désignent les couples d'états des constellations des voies 1 et 2 qui correspondent à cet état de signal composite). les données quantitatives dans cette sous figure sont : Tr : le numéro de la trame traitée, It : l'itération courante, MP : le nombre effectif moyen de particules utilisées pour traiter l'itération courante et SI : l'écart type du bruit estimé à cette itération.

- une reconstruction dans le domaine fréquentiel de la voie 1, de la voie 2 et du bruit.

- une reconstruction dans le domaine temporel des filtres de mise en forme sur chacune des voies

Sur la figure 7 on observe les signaux après la phase d'adaptation (0 itérations). Ils sont indiscernables. Les SINR pour les voies 1 et 2 ne peuvent pas encore être estimés ; leur valeur inconnue est notée « ? ».

Sur la figure 8 on observe les signaux après reconstruction avec les paramètres d'initialisation de l'algorithme (c'est-à-dire, après une seule itération) ; le niveau de bruit est élevé et on ne relève pas à l'oeil de structures pertinentes sur les différentes reconstructions.

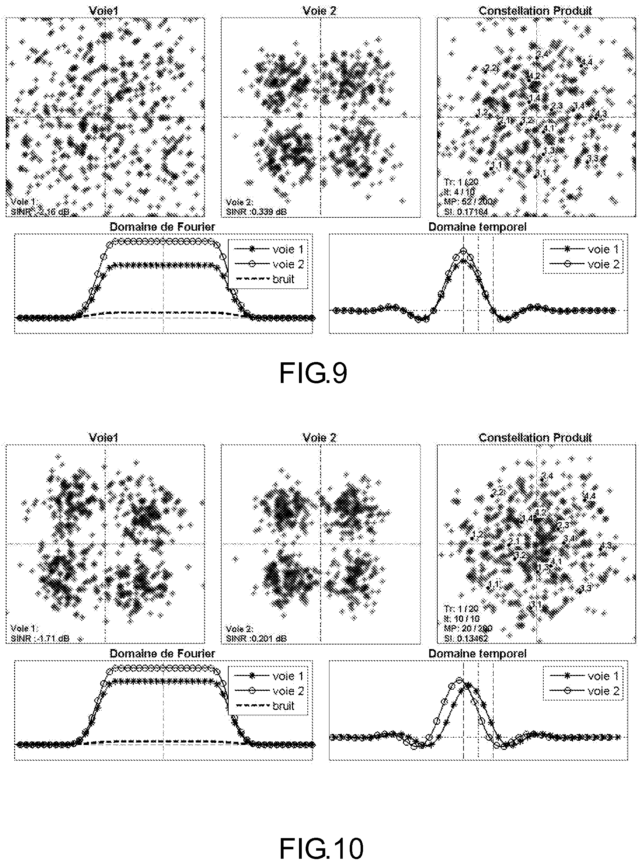

Sur la figure 9, après 4 itérations, on remarque que le niveau de bruit a diminué, on commence à prévoir une QPSK sur la reconstruction de la voie 2.

La figure 10 montre la dernière itération de l'algorithme sur la première trame ; sur chacune des voies, on voit une QPSK se former. Le niveau de bruit est encore cependant élevé, l'algorithme n'a pas fini de converger à la fin des itérations allouées à la première trame.

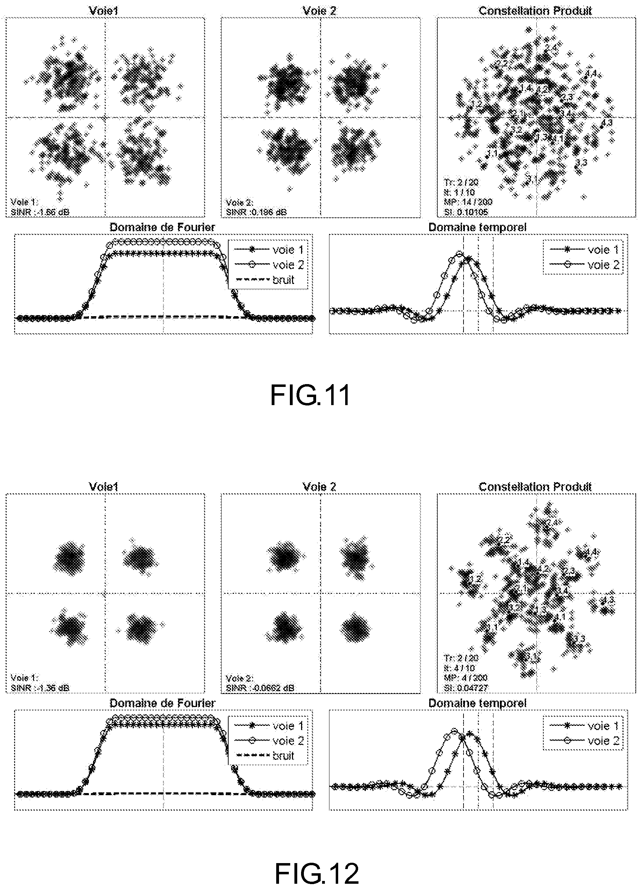

Cependant on voit sur la figure 11 que la convergence se poursuit sur la deuxième trame : le changement de trame n'a pas créé de bouleversement dans l'algorithme, le mode de convergence est continu.

C'est à la quatrième itération de la deuxième trame (figure 12) que la convergence de l'algorithme est acquise. Les QPSK sont bien dessinées sur chacune des voies reconstruites et le niveau de bruit estimé est inférieur au niveau de bruit du signal intercepté (l'étape d'adaptation a aussi fait gagner quelques dB de SNR).

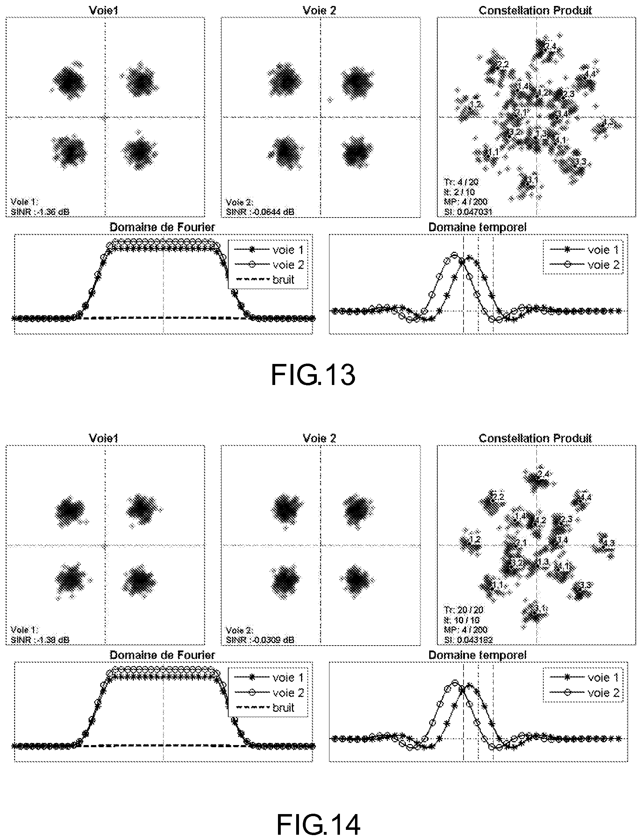

Les figure 13 et 14 sont typiques de la suite des résultats de l'algorithme : la convergence des paramètres reste stable avec le temps, l'algorithme suit l'évolution du canal et corrige l'accumulation des erreurs d'estimation des résidus de porteuses en faisant légèrement évoluer les erreurs de phases au fil des trames.

Il est à noter que le paradigme des particules avec multiplicité se montre, dans cet exemple, efficace pour adapter le nombre de particules effectives à la difficulté du cas à traiter. Si dans les premières itérations 88 à 14 particules effectives sont utilisées (sur les 200 disponibles), ce nombre se stabilise à 4-5 dans les itérations suivantes, ce qui est un gain en besoin de ressources temps et matérielles important par rapport à l'état de l'art en démodulation aveugle.

La figure 15 présente l'évolution de l'estimation des paramètres au fil des trames (estimation « globale ») et des itérations (estimation « locale »). On y observe notamment que l'estimation des erreurs de phase évolue légèrement pour compenser la variance sur l'estimation des résidus de porteuses.

## Revendications

1. Méthode temps réel de séparation et de démodulation aveugle de signaux de télécommunication numérique (10), à partir de l'observation au moyen d'un unique capteur d'un signal composite comprenant ces signaux, les paramètres de ces signaux incluant leur type de modulation, leur amplification, leur déphasage, leur temps de retard au niveau du capteur, leur fréquence et leur temps symbole, ces paramètres pour les différents signaux pouvant être différents, ou égaux, cette méthode comprenant les étapes suivantes :

   - acquisition d'une première pluralité d'observations du signal composite réalisées au moyen de l'unique capteur ;
   - estimation, à partir de la première pluralité d'observations acquise, des paramètres des signaux au sens du Maximum de Vraisemblance par un algorithme Espérance-Maximisation, l'espérance conditionnelle de la log-vraisemblance étant calculée, dans cet algorithme, récursivement par une méthode de filtrage-lissage particulaire ;
   - démodulation conjointe des signaux selon un algorithme de Viterbi stochastique.

2. La méthode de la revendication précédente, dans laquelle la méthode de filtrage-lissage particulaire comprend une approximation particulaire de la distribution de filtrage, cette approximation particulaire assignant, en plus des poids, des multiplicités aux particules de cette approximation, une multiplicité étant le nombre de particules représentant un même état.

3. La méthode de la revendication 1 ou 2, dans laquelle la méthode de filtrage-lissage particulaire comprend une approximation particulaire de la distribution de lissage, cette approximation particulaire assignant, en plus des poids, des multiplicités aux particules de cette approximation, une multiplicité étant le nombre de particules représentant un même état.

4. La méthode de l'une quelconque des revendications précédentes, comprenant, en outre,

   - une étape d'acquisition d'une deuxième pluralité d'observations du signal composite réalisées au moyen de l'unique capteur ; - une étape d'estimation, à partir de la deuxième pluralité d'observations acquise, des paramètres des signaux au sens du Maximum de Vraisemblance par un algorithme Espérance-Maximisation, l'espérance conditionnelle de la log-vraisemblance étant calculée, dans cet algorithme, récursivement par une méthode de filtrage-lissage particulaire ;

- une étape d'estimation à long terme des paramètres, cette estimation à long terme des paramètres étant associée à la deuxième pluralité d'observations et étant une combinaison linéaire des paramètres estimés à partir de la première pluralité d'observations et des paramètres estimés de la deuxième pluralité d'observations.

**5.** Produit programme d'ordinateur implémenté sur un support mémoire, susceptible d'être mis en oeuvre au sein d' une unité de traitement informatique et comprenant des instructions pour la mise en oeuvre d'une méthode selon l'une quelconque des revendications précédentes.

**Patentansprüche**

**1.** Echtzeitverfahren zur Blind-Trennung und -Demodulation von digitalen Telekommunikationssignalen (10) auf Basis der Beobachtung mit Hilfe eines einzigen Sensors eines Verbundsignals, umfassend diese Signale, die Parameter dieser Signale einschließlich ihres Modulationstyps, ihrer Verstärkung, ihrer Phasenverschiebung, ihrer Verzögerungszeit im Bereich des Sensors, ihrer Frequenz und ihrer Symbolzeit, wobei diese Parameter für die verschiedenen Signale unterschiedlich oder gleich sein können, wobei dieses Verfahren die folgenden Schritte umfasst:

- Erfassung einer ersten Vielzahl von Beobachtungen des Verbundsignals, die mit Hilfe des einzigen Sensors durchgeführt wurden;
- auf Basis der erfassten ersten Vielzahl von Beobachtungen Schätzung der Parameter des Signale im Sinne des Wahrscheinlichkeitsmaximums durch einen Erwartungsmaximierungsalgorithmus, wobei die Erwartung, die die Log-Wahrscheinlichkeit bedingt, in diesem Algorithmus rekursiv durch ein partikuläres Filterungs-Glättungs-Verfahren berechnet wird;
- gemeinsame Demodulation der Signale nach einem stochastischen Viterbi-Algorithmus.

**2.** Verfahren nach dem vorhergehenden Anspruch, bei dem das partikuläre Filterungs-Glättungs-Verfahren eine partikuläre Annäherung der Filterungs-Verteilung umfasst, wobei diese partikuläre Annäherung zusätzlich zu den Gewichten den Partikeln dieser Annäherung Vielfältigkeiten zuweist, wobei eine Vielfältigkeit die Anzahl von Partikeln ist, die einen selben Zustand aufweisen.

**3.** Verfahren nach Anspruch 1 oder 2, bei dem das partikuläre Filterungs-Glättungs-Verfahren eine partikuläre Annäherung der Glättungs-Verteilung umfasst, wobei diese partikuläre Annäherung zusätzlich zu den Gewichten den Partikeln dieser Annäherung Vielfältigkeiten zuweist, wobei eine Vielfältigkeit die Anzahl von Partikeln ist, die einen selben Zustand aufweisen.

**4.** Verfahren nach einem der vorhergehenden Ansprüche, ferner umfassend:

- einen Schritt der Erfassung einer zweiten Vielzahl von Beobachtungen des Verbundsignals, die mit Hilfe des einzigen Sensors durchgeführt wurden;
- auf Basis der erfassten zweiten Vielzahl von Beobachtungen einen Schritt der Schätzung der Parameter des Signale im Sinne des Wahrscheinlichkeitsmaximums durch einen Erwartungsmaximierungsalgorithmus, wobei die Erwartung, die die Log-Wahrscheinlichkeit bedingt, in diesem Algorithmus rekursiv durch ein partikuläres Filterungs-Glättungs-Verfahren berechnet wird;
- einen Schritt der Langfrist-Schätzung der Parameter, wobei diese Langfrist-Schätzung der Parameter der zweiten Vielzahl von Beobachtungen zugeordnet ist und eine lineare Kombination der geschätzten Parameter auf Basis der ersten Vielzahl von Beobachtungen und der geschätzten Parameter der zweiten Vielzahl von Beobachtungen ist.

**5.** Computerprogrammprodukt, das auf einem Speicherträger implementiert ist und geeignet ist, in einer Informatikverarbeitungseinheit eingesetzt zu werden, und umfassend Anweisungen für den Einsatz eines Verfahrens nach einem der vorhergehenden Ansprüche.

**Claims**

**1.** Real-time method for blind separation and demodulation of digital telecommunications signals (10), from the observation, by means of a single sensor, of a composite signal comprising these signals, the parameters of these signals including their modulation type, their amplification, their phase-shift, their delay time at the sensor, their frequency and their symbol time, these parameters for the different signals being able to be different, or equal, this method comprising the following steps:

- acquisition of a first plurality of observations of the composite signal performed by means of the signal sensor;
- estimation, from the first plurality of observations acquired, of the parameters of the signals in terms of the "Maximum Likelihood" by an Expectation-Maximization algorithm, the conditional expectation of the log-likelihood being calculated, in this algorithm, recursively by a particle filtering-smoothing method;
- joint demodulation of the signals according to a stochastic Viterbi algorithm.

2. Method of the preceding claim, in which the particle filtering-smoothing method comprises a particle approximation of the filtering distribution, this particle approximation assigning, in addition to weights, multiplicities to the particles of this approximation, a multiplicity being the number of particles representing a same state.

3. Method of Claim 1 or 2, in which the particle filtering-smoothing method comprises a particle approximation of the smoothing distribution, this particle approximation assigning, in addition to weights, multiplicities to the particles of this approximation, a multiplicity being the number of particles representing a same state.

4. Method of any one of the preceding claims, further comprising,

- a step of acquisition of a second plurality of observations of the composite signal performed by means of the single sensor;
- a step of estimation, from the second plurality of observations acquired, of the parameters of the signals in terms of the Maximum Likelihood by an Expectation-Maximization algorithm, the conditional expectation of the log-likelihood being calculated, in this algorithm, recursively by a particle filtering-smoothing method;
- a step of long-term estimation of the parameters, this long-term estimation of the parameters being associated with the second plurality of observations and being a linear combination of the parameters estimated from the first plurality of observations and of the estimated parameters of the second plurality of observations.

5. Computer program product implemented on a memory medium, capable of being implemented in a computer processing unit and comprising instructions for the implementation of a method according to any one of the preceding claims.

FIG.1

FIG.2

EP 3 235 201 B1

FIG.3

EP 3 235 201 B1

FIG.4

26

FIG.5

FIG.6

FIG.7

FIG.8

FIG.9

FIG.10

FIG.11

FIG.12

FIG.13

FIG.14

FIG.15

## RÉFÉRENCES CITÉES DANS LA DESCRIPTION

**Littérature non-brevet citée dans la description**

- Méthodes approchées de maximum de vraisemblances pour la classification et identification aveugles en communications numériques. **S. BAREMBRUCH.** rapport de thèse. Telecom ParisTech, 07 Mars 2011

- Sequential Monte Carlo methods for digital communications. **E. PUNSKAYA.** rapport de thèse. université de Cambridge, 2003